# FASCICULE DE BREVET EUROPEEN

(11) **EP 4 311 782 B1**
(45) Date de publication et mention de la délivrance du brevet: **29.10.2025**
(21) Numéro de dépôt: 23186218.6
(22) Date de dépôt: 18.07.2023
(51) Int. Cl.: B64F 5/10, B64C 1/06

(54) **SYSTÈME DE MANIPULATION D'UNE COQUE LATÉRALE D'UN AÉRONEF EN VUE D'UN ASSEMBLAGE D'UN CORPS DE FUSELAGE DE L'AÉRONEF ET PROCÉDÉ D'ASSEMBLAGE D'UN CORPS DE FUSELAGE D'UN AÉRONEF**
SYSTEM ZUR HANDHABUNG EINER SEITENSCHALE EINES FLUGZEUGS ZUR MONTAGE EINES RUMPFKÖRPERS EINES FLUGZEUGS UND VERFAHREN ZUR MONTAGE EINES RUMPFKÖRPERS EINES FLUGZEUGS
SYSTEM FOR HANDLING A SIDE SHELL OF AN AIRCRAFT FOR AN ASSEMBLY OF A FUSELAGE BODY OF THE AIRCRAFT AND METHOD FOR ASSEMBLING A FUSELAGE BODY OF AN AIRCRAFT

(30) Priorité: 25.07.2022 FR 2207614
(43) Date de publication de la demande: 31.01.2024
(73) Titulaire: Airbus Operations SAS, 31060 Toulouse (FR)
(72) Inventeur: DATAS, Jean-Marc, 31060 TOULOUSE (FR); CARTEREAU, Thomas, 31060 TOULOUSE (FR); BOURIQUET, Jacques, 31060 TOULOUSE (FR); AQUILA, André, 31700 BLAGNAC (FR); DARBONVILLE, Nicolas, 31700 BLAGNAC (FR); AUTRET, Thomas, 31700 BLAGNAC (FR); BARBOULE, Joël, 31060 TOULOUSE (FR); BAYONNE, Sébastien, 31060 TOULOUSE (FR); GUERIN, Patrick, 31060 TOULOUSE (FR); VAN DER VEEN, Sjoerd, 31060 TOULOUSE (FR)
(74) Mandataire: Gevers & Orès

(56) Documents cités:
- US-A1- 2020 223 559

## Description

### Domaine technique

La présente invention concerne un système de manipulation d'une coque latérale d'un aéronef en vue d'un assemblage d'un corps de fuselage de l'aéronef et procédé d'assemblage d'un corps de fuselage d'un aéronef.

### État de la technique

Un corps de fuselage (« fuselage barrel » en anglais) d'un aéronef comprend généralement plusieurs éléments, en particulier, une grille de plancher de cabine (« cabin floor grid » en anglais) de l'aéronef, une coque inférieure (« lower shell » en anglais), deux coques latérales (« side shells » en anglais) et une coque supérieure (« upper shell » en anglais). Ces éléments sont fabriqués indépendamment les uns des autres et les trous permettant leur assemblage entre eux sont percés avant leur assemblage. L'assemblage de ces éléments demande donc de mettre en œuvre des techniques d'assemblage de trou-à-trou (« hole-to-hole assembly » en anglais) et/ou d'assemblage de partie-à-partie (« part-to-part assembly » en anglais) afin de s'assurer qu'ils soient bien alignés pendant l'assemblage.

Afin de faciliter un bon alignement des éléments du corps de fuselage pendant l'assemblage, il est avantageux d'avoir la possibilité de bouger ces éléments par de petits mouvements de ces éléments les uns par rapport aux autres. Le document US 2020/223559 A1 décrit un système permettant de manipuler un élément de corps de fuselage. Les systèmes permettant de manipuler les éléments de corps de fuselage pendant un assemblage ne sont pas pleinement satisfaisants.

### Exposé de l'invention

La présente invention a pour objet de proposer une solution donnant la possibilité de bouger des éléments de corps de fuselage par de petits mouvements lors d'une manipulation de ces éléments de corps de fuselage. Pour cela, elle concerne un système de manipulation destiné à manipuler une coque latérale d'un aéronef en vue d'un assemblage d'un corps de fuselage de l'aéronef, la coque latérale étant configurée pour être assemblée au moins à une coque inférieure de l'aéronef et une coque supérieure, le corps de fuselage après assemblage étant lié à un repère orthogonal défini par un axe X parallèle à un axe longitudinal du corps de fuselage, un axe Y horizontal et un axe Z vertical.

Selon l'invention, le système de manipulation comprend au moins deux dispositifs de fixation par coque latérale, chacun des dispositifs de fixation étant destiné à être fixé à une extrémité longitudinale de la coque latérale, chacun des dispositifs de fixation comportant une pièce de fixation, un support de fixation et un premier élément élastique ;
- la pièce de fixation étant destinée à être fixée sur une surface externe de la coque latérale ;
- le support de fixation étant destiné à être monté sur un dispositif de soutien d'une plateforme d'assemblage, le support de fixation étant configuré pour que la pièce de fixation et le premier élément élastique soient mobiles en translation, dans un plan comprenant l'axe X et l'axe Y par rapport au dispositif de soutien sur lequel le support de fixation est destiné à être monté ;
- le premier élément élastique étant fixé à la pièce de fixation et au support de fixation, le premier élément élastique étant configuré pour autoriser un déplacement de la pièce de fixation par rapport au dispositif de soutien selon un axe parallèle à l'axe Z autour d'une position nominale, le premier élément élastique présentant une raideur prédéterminée de façon que le déplacement de la pièce de fixation présente une amplitude de déplacement prédéterminée autour de la position nominale de la pièce de fixation par rapport au support de fixation, le support de fixation comprenant une première extrémité et une deuxième extrémité opposée à la première extrémité, la première extrémité étant destinée à être montée rotative par rapport au dispositif de soutien autour d'un axe parallèle à l'axe X et montée en translation selon l'axe Y par rapport au dispositif de soutien.

Ainsi, un opérateur peut faire bouger, par de petits mouvements autour de la position nominale de la pièce de fixation, la coque latérale à laquelle est fixée la pièce de fixation du dispositif de fixation. Pour cela l'opérateur peut amener manuellement la coque latérale dans une position qui permettra un alignement de la coque latérale avec un autre élément du corps de fuselage.

Le support de fixation comprend en outre :
- une fourche comportant une première extrémité et une deuxième extrémité opposée à la première extrémité, la première extrémité étant destinée à être montée rotative sur une tige d'un dispositif référentiel de positionnement et en translation selon l'axe Y par rapport à la tige, le dispositif référentiel de positionnement étant destiné à être monté fixe sur le dispositif de maintien sur lequel est monté le dispositif de fixation, la tige présentant un axe longitudinal parallèle à l'axe X, la tige étant mobile en translation selon l'axe X, la pièce de fixation étant liée à la fourche par l'intermédiaire du premier élément élastique entre la première extrémité et la deuxième extrémité de la fourche ;
- un vérin mécanique monté fixe en translation selon l'axe Z sur le support de fixation, le vérin mécanique comprenant un piston configuré pour être entraîné par le vérin mécanique selon l'axe Z, le piston comprenant une extrémité libre destiné à être fixée à la deuxième extrémité de la fourche ;
la fourche étant apte à entrer en rotation autour de l'axe longitudinal de la tige quand le piston est entraîné par le vérin mécanique selon l'axe Z, la rotation de la fourche étant apte à entraîner une rotation de la coque latérale autour de l'axe longitudinal du corps de fuselage.

Selon un premier mode de réalisation, le premier élément élastique comprend un ressort de compression présentant une extrémité supérieure fixée à la pièce de fixation et une extrémité inférieure fixée au support de fixation, l'extrémité inférieure étant en appui sur le support de fixation, le ressort de compression étant configuré pour exercer une force d'expansion selon l'axe Z vers le haut contre la pièce de fixation au niveau de son extrémité supérieure.

Selon le premier mode de réalisation, le support de fixation comprend une chape, la chape présentant deux jambes et une plaque reliant les deux jambes, la chape étant montée en translation selon l'axe Y sur le dispositif de maintien, la chape étant liée au dispositif de maintien par une première extrémité des deux jambes, la plaque liant les deux jambes à une deuxième extrémité des deux jambes opposée à la première extrémité des deux jambes, les deux jambes comprenant chacune une ouverture circulaire, l'ouverture circulaire de chacune des deux jambes présentant chacun un centre aligné selon un axe parallèle à l'axe X, l'ouverture circulaire de chacune des deux jambes étant destinée à recevoir une goupille,
le vérin mécanique étant fixé sur la plaque de la chape de façon que l'extrémité libre du piston du vérin mécanique se trouve entre les deux jambes de la chape, l'extrémité libre du piston du vérin mécanique présentant un anneau destiné à recevoir la goupille, l'extrémité libre du piston du vérin mécanique étant configurée pour être fixée à la deuxième extrémité de la fourche par l'introduction de la goupille dans l'ouverture circulaire de chacune des deux jambes et dans l'anneau.

En outre, le support de fixation comprend :
- un élément de fixation destiné à être fixé au dispositif de maintien ;
- un deuxième élément élastique liant la chape à l'élément de fixation, le deuxième élément élastique étant configuré pour autoriser un déplacement de la chape par rapport à l'élément de fixation selon un axe parallèle à l'axe Y, le deuxième élément élastique présentant une raideur prédéterminée de façon que le déplacement présente une amplitude prédéterminée autour d'une position nominale de la chape par rapport à l'élément de fixation ;
la première extrémité de la fourche comprenant :
- une portion de support destinée à être monté rotatif sur la tige du dispositif référentiel de positionnement ;
- un troisième élément élastique, le troisième élément élastique liant la deuxième extrémité de la fourche et la portion de support, le troisième élément élastique étant configuré pour autoriser un déplacement de la fourche par rapport à la portion de support selon un axe parallèle à l'axe Y, le troisième élément élastique présentant une raideur prédéterminée de façon que le déplacement présente une amplitude prédéterminée autour d'une position nominale de la fourche par rapport à la portion de support.

Selon le premier mode de réalisation, le système de manipulation comprend un quatrième élément élastique liant le dispositif de soutien à la pièce de fixation, le quatrième élément élastique étant configuré pour autoriser un déplacement de la pièce de fixation par rapport au dispositif de soutien selon un axe parallèle à l'axe X autour d'une position nominale, le quatrième élément élastique présentant une raideur prédéterminée de façon que le déplacement de la pièce de fixation présente une amplitude de déplacement prédéterminée autour de la position nominale de la pièce de fixation par rapport au dispositif de soutien.

Selon un deuxième mode de réalisation, le premier élément élastique comprend un ressort de traction présentant une extrémité supérieure fixée au support de fixation et une extrémité inférieure fixée à la pièce de fixation, l'extrémité inférieure étant fixée en suspension au support de fixation, le ressort de traction étant configuré pour exercer une force de traction selon l'axe Z vers le haut sur la pièce de fixation au niveau de son extrémité inférieure.

Selon le deuxième mode de réalisation, le support de fixation comprend un élément de fixation destiné à être fixé au dispositif de maintien, le vérin mécanique étant monté en translation selon l'axe X à l'élément de fixation,
le premier élément élastique étant monté en translation à la fourche selon l'axe Y.

En outre, le support de fixation comprend au moins un premier rail de guidage fixé sur l'élément de fixation parallèle à l'axe X pour monter en translation selon l'axe X le vérin mécanique à l'élément de fixation,
le support de fixation comprend au moins un deuxième rail de guidage fixé sur la fourche parallèle à l'axe Y pour monter en translation selon l'axe Y le premier élément élastique à la fourche.

Selon le deuxième mode de réalisation, le système de manipulation comprend un dispositif élastique liant le dispositif de soutien à la pièce de fixation, le dispositif élastique étant configuré pour autoriser un déplacement de la pièce de fixation par rapport au dispositif de soutien selon un axe parallèle à l'axe X et selon un axe parallèle à l'axe Y autour d'une position nominale, le dispositif élastique présentant une raideur prédéterminée de façon que le déplacement de la pièce de fixation présente une amplitude de déplacement prédéterminée autour de la position nominale de la pièce de fixation par rapport au dispositif de soutien.

Par ailleurs, la pièce de fixation comprend :
- un cadre de fixation comportant au moins un montant conformé pour épouser au moins en partie la surface externe de la coque latérale, le ou les montants étant destinés à fixer la pièce de fixation sur la surface externe de la coque latérale ;
- une barre de fixation présentant un axe longitudinal parallèle à l'axe X, la barre de fixation étant fixée au premier élément élastique.

Par exemple, le premier élément élastique comprend au moins un ressort hélicoïdal.

En outre, la pièce de fixation comprend en outre une première traverse de guidage présentant un axe longitudinal parallèle à l'axe Z, la première traverse de guidage présentant une première extrémité montée en rotation autour de l'axe X à la fourche, la première traverse de guidage présentant une deuxième extrémité montée en translation à la barre de fixation, le ressort hélicoïdal présentant une première extrémité fixée à la fourche et une deuxième extrémité fixée à la barre de fixation, le ressort hélicoïdal entourant la première traverse de guidage, le premier élément élastique comprend en outre au moins une deuxième traverse de guidage parallèle à la première traverse de guidage, la deuxième traverse de guidage présentant une première extrémité montée en rotation autour de l'axe X à la fourche, la deuxième traverse de guidage présentant une deuxième extrémité montée en translation à la barre de fixation.

De plus, la pièce de fixation comprend en outre une traverse de guidage présentant un axe longitudinal parallèle à l'axe Z, la traverse de guidage présentant une première extrémité et une deuxième extrémité, la première extrémité de la traverse de guidage étant fixée à la barre de fixation, la traverse de guidage traversant la fourche entre sa première extrémité et sa deuxième extrémité, le ressort hélicoïdal présentant une première extrémité fixée à la deuxième extrémité de la traverse de guidage et une deuxième extrémité fixée à la barre de fixation, le ressort hélicoïdal entourant la traverse de guidage.

Par ailleurs, le système de manipulation comprend en outre au moins une structure de maintien configurée pour maintenir la forme de la coque latérale, la structure de maintien comprenant :
- une barre courbe en forme d'arc destinée à être fixée à la coque latérale de façon qu'elle se trouve dans un plan perpendiculaire à l'axe X, la barre courbe présentant une première extrémité destiné à être fixée à un bord supérieur de la coque latérale et une deuxième extrémité destinée à être fixée sur une surface interne de la coque latérale ;
- une barre droite présentant deux extrémités fixées respectivement à la première extrémité de la barre courbe et à la deuxième extrémité de la barre courbe ;
- une contrefiche présentant une première extrémité comportant une plaque fixée à la barre courbe et la barre droite, la plaque étant comprise dans un plan comprenant la barre courbe et la barre droite, la contrefiche comprenant en outre une deuxième extrémité destinée à être fixée à la surface interne de la coque latérale, la contrefiche présentant un axe longitudinal faisant un angle non nul avec la plaque.

Par ailleurs, le système de manipulation comprend en outre au moins un module d'alignement comprenant :
- un pion d'alignement destiné à être fixé sur une surface interne de la coque supérieure ;
- une interface de réception comportant un cylindre destiné à être fixé à la première extrémité de la barre courbe, un premier piston et un cinquième élément élastique, le premier piston étant apte à coulisser dans le cylindre, le premier piston comportant une surface de réception destinée à recevoir le pion d'alignement, le cylindre et le premier piston présentant des axes longitudinaux parallèles à l'axe Z, le premier piston étant mobile en translation selon l'axe Z par rapport au cylindre de l'interface de réception, le cinquième élément élastique étant configuré pour exercer une force selon l'axe Z contre le premier piston, ladite force tendant à amener le premier piston dans une position nominale selon l'axe Z si aucune force n'est appliquée sur la surface de réception.

De plus, l'interface de réception comprend en outre au moins un sixième élément élastique configuré pour exercer une force dans un plan parallèle à l'axe X et l'axe Y contre le premier piston, ladite force tendant à amener le premier piston dans une position nominale selon l'axe X et l'axe Y.

En outre, l'interface de réception comprend :
- un deuxième piston présentant un axe longitudinal parallèle à l'axe Z, le deuxième piston étant mobile en translation dans un plan parallèle à l'axe X et l'axe Y par rapport au cylindre de l'interface de réception et fixe selon l'axe Z, le premier piston étant apte à coulisser dans le deuxième piston ;
- au moins un élément de réglage configuré pour ajuster une position du deuxième piston dans un plan parallèle à l'axe X et à l'axe Y.

Par exemple, le module d'alignement comprend :
- trois éléments de réglage répartis régulièrement autour du cylindre, chacun des trois éléments de réglage comprend une vis vissée dans une ouverture à travers le cylindre, la vis de chacun des trois éléments de réglage présentant des axes longitudinaux compris dans un plan commun parallèle à l'axe X et à l'axe Y, les axes longitudinaux de chaque vis étant concourants, la vis de chacun des trois éléments de réglage comprenant une première extrémité configurée pour recevoir un outil permettant un vissage ou un dévissage de la vis et une deuxième extrémité configurée pour exercer contre le deuxième piston une force parallèle à l'axe longitudinal de la vis en fonction du vissage et du dévissage de la vis ;
- trois septièmes éléments élastiques répartis régulièrement autour du cylindre, chacun des septièmes éléments élastiques étant apte à exercer une force contre le premier piston.

L'invention concerne également un procédé d'assemblage d'un corps de fuselage d'un aéronef à l'aide du système de manipulation tel que spécifié ci-dessus. Selon l'invention le procédé comprend :
- une étape d'installation d'une coque inférieure du corps de fuselage sur une plateforme d'assemblage,
- une étape de fixation de deux coques latérales du corps de fuselage, chacune des deux coques latérales étant fixée à deux dispositifs de fixation du système de manipulation, chacune des deux coques latérales étant fixée aux deux dispositifs de fixation à l'aide de la pièce de fixation de chacun des deux dispositifs de fixation,
- une étape d'alignement des deux coques latérales par rapport à la coque inférieure selon un plan comprenant l'axe X et l'axe Y en manipulant les deux coques latérales à l'aide du support de fixation du système de manipulation,
- une étape d'alignement des deux coques latérales par rapport à la coque inférieure selon un axe parallèle à l'axe Z en manipulant les deux coques latérales à l'aide du premier élément élastique du système de manipulation,
- une étape d'assemblage des deux coques latérale à la coque inférieure.

Par ailleurs, le procédé comprend en outre les étapes suivantes :
- une étape de fixation d'au moins une structure de maintien du système de manipulation à la surface interne de chacune des coques latérales,
- une étape de fixation d'au moins un pion d'alignement sur la surface interne d'une coque supérieure du corps de fuselage,
- une étape de dépôt du pion d'alignement sur la surface de réception en approchant la coque supérieure aux coques latérales,
- une étape d'alignement de la coque supérieure par rapport aux coques latérales selon un plan comprenant l'axe X et l'axe Y à l'aide de l'interface de réception du module d'alignement,
- une étape d'assemblage de la coque supérieure aux coques latérales.

De plus, le procédé comprend une étape de mise en place d'une grille de plancher de l'aéronef avant l'étape de dépôt.

### Brève description des figures

Les figures annexées feront bien comprendre comment l'invention peut être réalisée. Sur ces figures, des références identiques désignent des éléments semblables.
La figure 1 représente une vue en perspective d'un dispositif de fixation selon un premier mode de réalisation.
La figure 2 représente une vue en perspective d'une coupe selon plan parallèle à l'axe X et l'axe Z d'un dispositif de fixation selon le premier mode de réalisation.
La figure 3 représente une vue en perspective d'une structure de maintien.
La figure 4 représente une vue en perspective d'un corps de fuselage sur une plateforme d'assemblage comportant un système de manipulation selon le premier mode de réalisation.
La figure 5 représente une vue en perspective du dispositif de fixation selon un deuxième mode de réalisation.
La figure 6 représente une vue en perspective d'après un autre angle de vue que celui de la figure 5 du dispositif de fixation selon le deuxième mode de réalisation.
La figure 7 représente une vue en perspective d'une pièce de fixation auxiliaire selon un mode de réalisation.
La figure 8 représente une vue en perspective d'une chape du support de fixation selon le premier mode de réalisation.
La figure 9 représente une vue en perspective de la première extrémité de la fourche selon le premier mode de réalisation.
La figure 10 représente une vue de profil du dispositif de fixation selon le premier mode de réalisation.
La figure 11 représente une vue en perspective d'un module d'alignement comprenant une interface de réception et un pion d'alignement.
La figure 12 représente une vue en perspective d'une interface de réception.
La figure 13 représente une coupe transversale de l'interface de réception selon un plan P1.
La figure 14 représente une coupe longitudinale de l'interface de réception selon un plan P2.
La figure 15 représente une vue latérale d'un aéronef comportant un corps de fuselage.

### Description détaillée

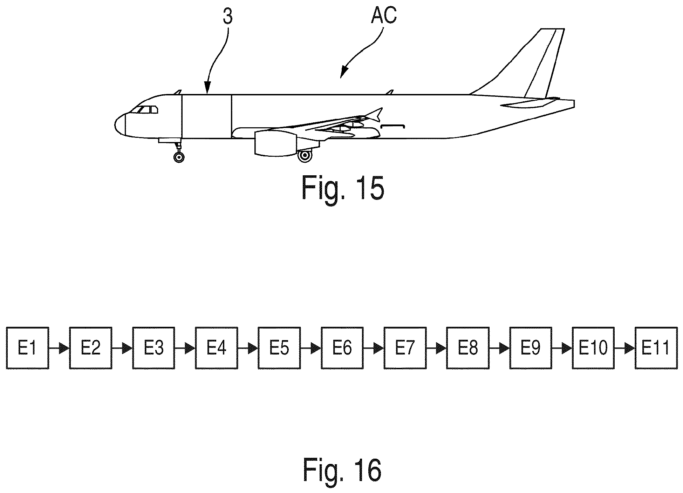

Le système de manipulation 1 est destiné à manipuler une coque latérale 2 d'un aéronef en vue d'un assemblage d'un corps de fuselage 3 de l'aéronef AC (figure 15).

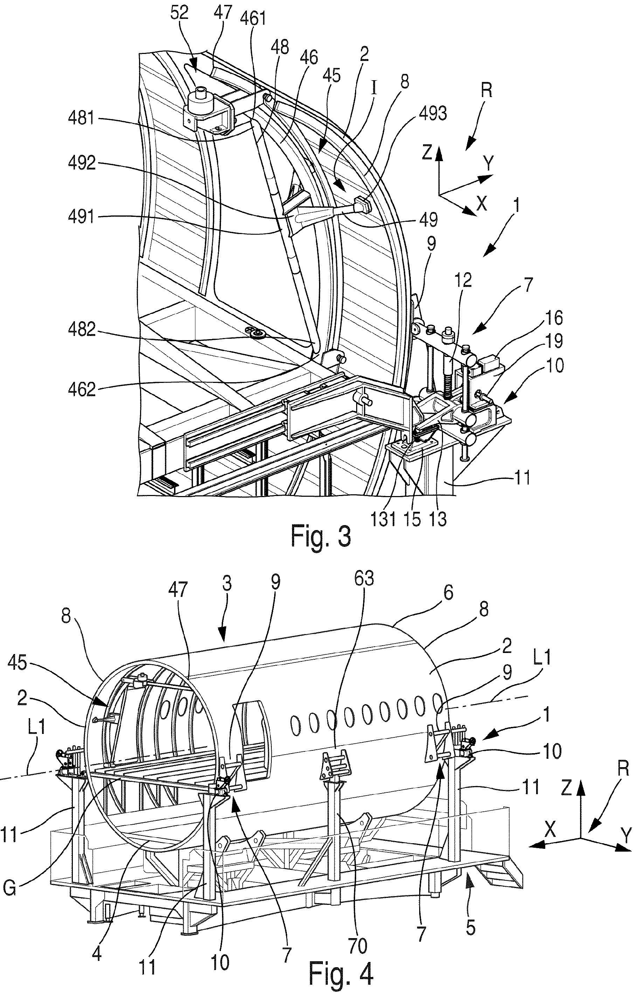

La coque latérale 2 est configurée pour être assemblée au moins à une coque inférieure 4 de l'aéronef reçue sur une plateforme d'assemblage 5 et une coque supérieure 6 comme représenté sur la figure 4.

Le corps de fuselage 3 après assemblage est lié à un repère orthogonal R défini par un axe X parallèle à un axe longitudinal L1 du corps de fuselage 3, un axe Y horizontal et un axe Z vertical.

On appelle « extrémités longitudinales » d'un objet les extrémités longitudinalement opposées de l'objet. L'adjectif « vertical » et l'adverbe « verticalement » font référence à la direction de la pesanteur.

De plus, les adjectifs « supérieur » et « inférieur » sont définis par rapport au sol sur lequel le système de manipulation 1 est susceptible d'être déplacé. Un objet qualifié par l'adjectif « inférieur » se situe plus proche du sol qu'un objet qualifié par l'adjectif « supérieur ». Les adjectifs « interne » et « externe » sont définis par rapport au corps de fuselage 3. Un objet ou une surface est dit « interne » lorsqu'il est dirigé vers l'intérieur du corps de fuselage 3. Il est dit « externe » lorsqu'il est dirigé vers l'extérieur du corps de fuselage 3. Les locutions « vers le haut » et « vers le bas » sont définies par rapport au sol. Un objet se déplaçant vers le bas correspond à un objet se déplaçant vers le sol. Un objet se déplaçant vers le haut correspond à un objet se déplaçant dans un sens à l'opposé du sol.

Le système de manipulation 1 comprend au moins deux dispositifs de fixation 7 par coque latérale 2. Chacun des dispositifs de fixation 7 est destiné à être fixé à une extrémité longitudinale 8 de la coque latérale 2.

Chacun des dispositifs de fixation 7 comporte une pièce de fixations 9, un support de fixation 10 et un premier élément élastique 12.

La pièce de fixation 9 est destinée à être fixée sur une surface externe E de la coque latérale 2.

Le support de fixation 10 est destiné à être monté sur un dispositif de maintien 11 d'une plateforme d'assemblage 5. Le support de fixation 10 est configuré pour que la pièce de fixation 9 et le premier élément élastique 12 soient mobiles en translation, dans un plan comprenant l'axe X et l'axe Y, par rapport à un dispositif de maintien 11 d'une plateforme d'assemblage 5. Par exemple, le dispositif de maintien 11 correspond à un mât d'alignement de la plateforme d'assemblage 5, comme représenté sur la figure 4. Le support de fixation 10 peut être fixé au sommet du mât d'alignement.

Le premier élément élastique 12 est fixé à la pièce de fixation 9 et au support de fixation 10.

Le premier élément élastique 12 est configuré pour autoriser un déplacement de la pièce de fixation 9 par rapport au dispositif de soutien 11 selon un axe parallèle à l'axe Z autour d'une position nominale. Le premier élément élastique 12 présente en outre une raideur prédéterminée de façon que le déplacement de la pièce de fixation 9 présente une amplitude de déplacement prédéterminée autour de la position nominale de la pièce de fixation 9 par rapport au support de fixation 10. Par exemple, la position nominale de la pièce de fixation 9 par rapport au support de fixation 10 correspond à une position dans laquelle la pièce de fixation 9 n'est pas sollicitée par une force à part celle du premier élément élastique 12.

Le support de fixation 10 comprend une première extrémité 131 et une deuxième extrémité 132 opposée à la première extrémité 131. La première extrémité 131 est destinée à être montée rotative par rapport au dispositif de soutien 11 autour d'un axe L2 parallèle à l'axe X et montée en translation selon l'axe Y par rapport au dispositif de soutien 11.

Le support de fixation 10 peut comprendre en outre au moins une fourche 13 et un vérin mécanique 16.

La fourche 13 comporte une première extrémité 131 et une deuxième extrémité 132 opposée à la première extrémité 131. La première extrémité 131 est destinée à être montée rotative sur une tige 14 d'un dispositif référentiel de positionnement 15 et en translation selon l'axe Y par rapport à la tige 14.

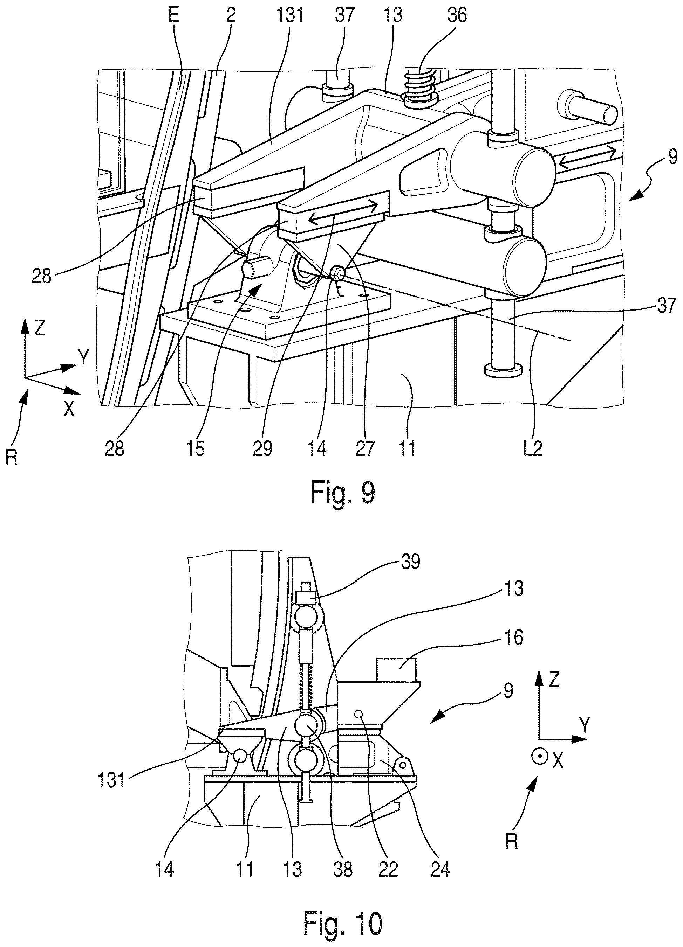

Ledit dispositif référentiel de positionnement 15 est destiné à être monté fixe sur le dispositif de maintien 11 sur lequel est monté le dispositif de fixation 7. La tige 14 présente un axe longitudinal L2 parallèle à l'axe X. Par ailleurs, la tige 14 est mobile en translation selon l'axe X (figure 9).

La pièce de fixation 9 est liée à la fourche 13 par l'intermédiaire du premier élément élastique 12 entre la première extrémité 131 et la deuxième extrémité 132 de la fourche 13.

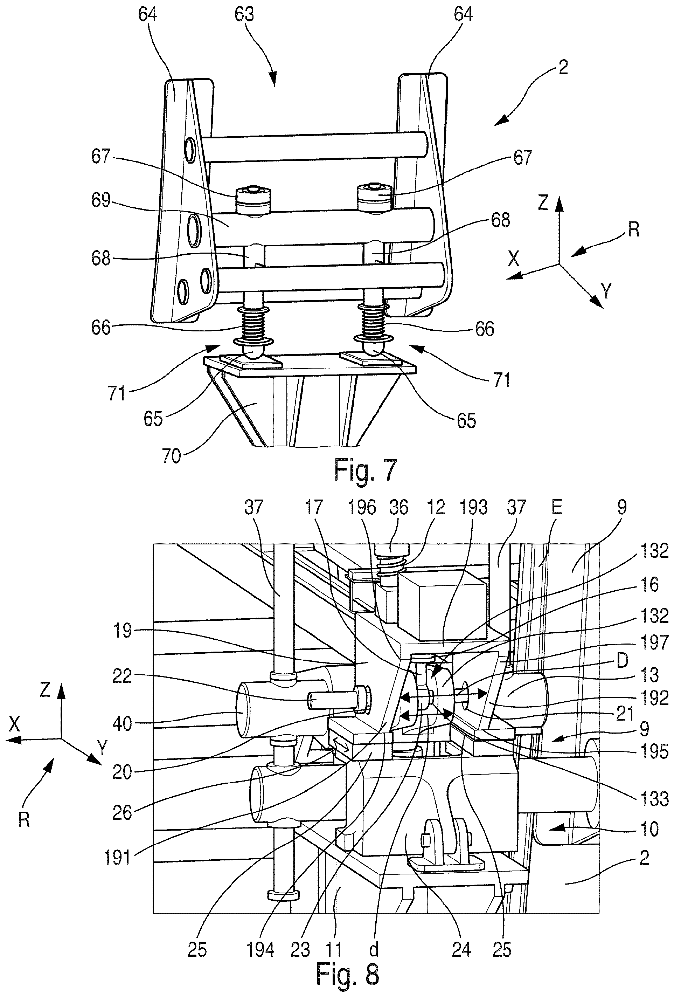

Le vérin mécanique 16 est monté fixe en translation selon l'axe Z sur le support de fixation 10. Le vérin mécanique 16 comprend un piston 17 configuré pour être entraîné par le vérin mécanique 16 selon l'axe Z. Le piston 17 comprend une extrémité libre destiné à être fixée à la deuxième extrémité 132 de la fourche 13 (figure 8).

La fourche 13 est donc apte à entrer en rotation autour de l'axe longitudinal L2 de la tige 14 quand le piston 17 est entraîné par le vérin mécanique 16 selon l'axe Z. La rotation de la fourche 13 est alors apte à entraîner une rotation de la coque latérale 2 autour de l'axe longitudinal L1 du corps de fuselage 3.

En effet, quand le piston 17 est entraîné par le vérin mécanique 16 vers le haut, la deuxième extrémité 132 de la fourche 13 est entraînée vers le haut par une rotation de la fourche 13 autour de l'axe longitudinal L2 de la tige 14 sur laquelle la première extrémité 131 de la fourche 13 est montée rotative. L'entraînement de la deuxième extrémité 132 vers le haut entraîne le premier élément élastique 12 ainsi que la pièce de fixation 9 vers le haut. La coque latérale est fixée à la pièce de fixation 9. Ainsi, cette rotation de la fourche 13 entraîne la translation vers le haut de la coque latérale 2 à laquelle la pièce de fixation 9 est fixée dans le sens de déplacement de la pièce de fixation 9. De même, quand le piston 17 est entraîné par le vérin mécanique 16 vers le bas, la deuxième extrémité 132 de la fourche 13 est entraînée vers le bas par une rotation de la fourche 13 autour de l'axe longitudinal L2 de la tige 14. L'entraînement de la deuxième extrémité 132 vers le bas entraîne le premier élément élastique 12 ainsi que la pièce de fixation 9 vers le bas, ce qui entraîne la translation vers le bas de la coque latérale 2 à laquelle la pièce de fixation 9 est fixée dans le sens de déplacement de la pièce de fixation 9.

Selon un premier mode de réalisation, le premier élément élastique 12 comprend un ressort de compression 121 présentant une extrémité supérieure fixée à la pièce de fixation 9 et une extrémité inférieure fixée au support de fixation 10. Le ressort de compression 121 peut comprendre un axe longitudinal parallèle à l'axe Z. L'extrémité inférieure est en appui sur le support de fixation 10. Le ressort de compression 121 est configuré pour exercer une force d'expansion selon l'axe Z vers le haut contre la pièce de fixation 9 au niveau de son extrémité supérieure. La pièce de fixation 9 est donc posée sur le ressort de compression 121 qui, lui-même est posé sur le support de fixation 10. Ainsi, le ressort de compression 121 autorise un déplacement de la pièce de fixation 9 autour de la position nominale dans une direction parallèle à l'axe Z. Le ressort de compression 121 peut correspondre à un ressort hélicoïdal de compression.

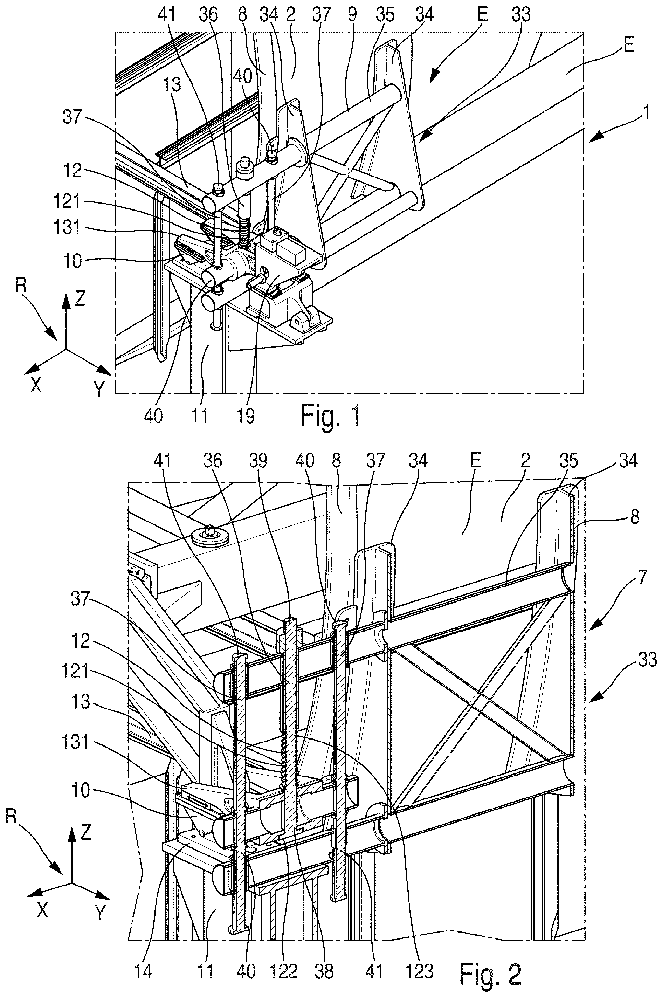

Selon le premier mode de réalisation représenté sur la figure 1, la figure 2, la figure 3, la figure 8, la figure 9 et la figure 10, le support de fixation 10 peut comprendre une chape 19.

La chape 19 présente deux jambes 191, 192 et une plaque 193 reliant les deux jambes 191, 192. La chape 19 est montée en translation selon l'axe Y sur le dispositif de maintien 11. La chape 19 est liée au dispositif de maintien 11 par une première extrémité 194, 195 des deux jambes 191, 192.

La plaque 193 lie les deux jambes 191, 192 à une deuxième extrémité 196, 197 des deux jambes 191, 192 opposée à la première extrémité 194, 195 des deux jambes 191, 192.

Les deux jambes 191, 192 comprennent chacune une ouverture circulaire 20, 21. Les ouvertures circulaires 20, 21 des deux jambes 191, 192 présentent un centre aligné selon un axe parallèle à l'axe X. L'ouverture circulaire 20, 21 de chacune des deux jambes 191, 192 est destinée à recevoir une goupille 22.

Le vérin mécanique 16 est fixé sur la plaque 193 de la chape 19 de façon que l'extrémité libre du piston 17 du vérin mécanique 16 se trouve entre les deux jambes 191, 192 de la chape 19. L'extrémité libre du piston 17 du vérin mécanique 16 présentant un anneau 23 destiné à recevoir la goupille 22.

L'anneau 23 présente un cercle ayant un centre compris sur une droite comprenant le centre de l'ouverture circulaire 20, 21 de chacune des jambes 191, 192. La deuxième extrémité 132 de la fourche 13 comprend au moins un anneau 133. L'extrémité libre du piston 17 du vérin mécanique 16 est configurée pour être fixée à la deuxième extrémité 132 de la fourche 13 par l'introduction de la goupille 22 dans l'ouverture circulaire 20, 21 de chacune des deux jambes 191, 192, dans le ou les anneaux 133 de la deuxième extrémité 132 de la fourche 13 et dans l'anneau 23.

De préférence, les deux jambes 191, 192 présentent un écartement D entre elles ayant une dimension prédéterminée autorisant une translation de la fourche 13 selon l'axe X entre les deux jambes 191, 192. Par exemple, l'écartement D est supérieur à la dimension selon l'axe X de la deuxième extrémité 132 de la fourche 13. La dimension selon l'axe X de la deuxième extrémité 132 de la fourche peut correspondre à la dimension d telle que représentée sur la figure 8. L'écartement D peut être également supérieur à l'amplitude souhaitée de déplacement en translation de la fourche 13 selon l'axe X. Pour cela, la différence entre la dimension D et la dimension d correspond à ladite amplitude souhaitée de déplacement.

Le support de fixation 10 peut comprendre en outre un élément de fixation 24 destiné à être fixé au dispositif de maintien 11 et un deuxième élément élastique 25. Le deuxième élément élastique 25 lie la chape 19 à l'élément de fixation 24. Le deuxième élément élastique 25 est configuré pour autoriser un déplacement 26 (représenté par une double flèche) de la chape 19 par rapport à l'élément de fixation 24 selon un axe parallèle à l'axe Y. Le deuxième élément élastique 25 présente une raideur prédéterminée de façon que le déplacement 26 présente une amplitude prédéterminée autour d'une position nominale de la chape 19 par rapport à l'élément de fixation 24. Par exemple, la position nominale de la chape 19 par rapport à l'élément de fixation 24 correspond à une position dans laquelle la chape 19 n'est pas sollicitée par une force à part celle du deuxième élément élastique 25.

La première extrémité 131 de la fourche 13 peut également comprendre une portion de support 27 destinée à être montée rotative sur la tige 14 du dispositif référentiel de positionnement 15 autour de l'axe X et un troisième élément élastique 28.

Le troisième élément élastique 28 lie la deuxième extrémité 132 de la fourche 13 et la portion de support 27. Le troisième élément élastique 28 est configuré pour autoriser un déplacement 29 de la fourche 13 par rapport à la portion de support 27 selon un axe parallèle à l'axe Y. Le troisième élément élastique 28 présente une raideur prédéterminée de façon que le déplacement 29 présente une amplitude prédéterminée autour d'une position nominale de la fourche 13 par rapport à la portion de support 27. Par exemple, la position nominale de la fourche 13 par rapport à la portion de support 27 correspond à une position dans laquelle la fourche 13 n'est pas sollicitée par une force à part celle du troisième élément élastique 28. De façon non limitative, le deuxième élément élastique 25 et le troisième élément élastique 28 peuvent correspondre à une couche en matière élastique, telle que du téflon.

Selon le premier mode de réalisation, le système de manipulation 1 peut comprendre un quatrième élément élastique (non représenté) liant le dispositif de soutien 11 à la pièce de fixation 9. Le quatrième élément élastique est configuré pour autoriser un déplacement de la pièce de fixation 9 par rapport au dispositif de soutien 11 selon un axe parallèle à l'axe X autour d'une position nominale. Le quatrième élément élastique présente une raideur prédéterminée de façon que le déplacement de la pièce de fixation 9 présente une amplitude de déplacement prédéterminée autour de la position nominale de la pièce de fixation 9 par rapport au dispositif de soutien 11.

Selon un deuxième mode de réalisation, le premier élément élastique 12 comprend un ressort de traction 121 présentant une extrémité supérieure fixée au support de fixation 10 et une extrémité inférieure fixée à la pièce de fixation 9. Le ressort de traction 121 peut comprendre un axe longitudinal parallèle à l'axe Z. L'extrémité inférieure est fixée en suspension au support de fixation 10. Le ressort de traction 121 est configuré pour exercer une force de traction selon l'axe Z vers le haut sur la pièce de fixation 9 au niveau de son extrémité inférieure. La pièce de fixation 9 est donc suspendue au support de fixation 10 par l'intermédiaire du ressort de traction 121. Ainsi, le ressort de traction 121 autorise un déplacement de la pièce de fixation 9 autour de la position nominale dans une direction parallèle à l'axe Z. Le ressort de traction 121 peut correspondre à un ressort hélicoïdal de traction.

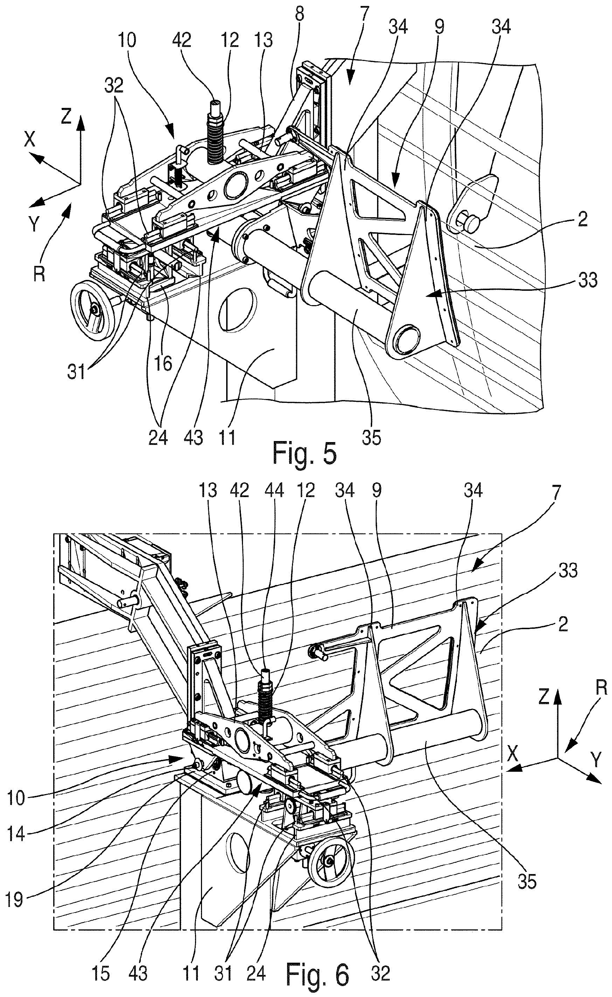

Selon le deuxième mode de réalisation représenté sur la figure 5 et la figure 6, le support de fixation 10 comprend un élément de fixation 24 destiné à être fixé au dispositif de maintien 11. Le vérin mécanique 16 est monté en translation selon l'axe X à l'élément de fixation 24. Le premier élément élastique 12 est monté en translation à la fourche 13 selon l'axe Y.

Le support de fixation 10 peut comprendre au moins un premier rail de guidage 31 fixé sur l'élément de fixation 24. Le ou les premiers rails de guidage 31 sont fixés parallèles à l'axe X pour monter en translation selon l'axe X le vérin mécanique 16 à l'élément de fixation 24. De plus, le support de fixation 10 peut comprendre au moins un deuxième rail de guidage 32 fixé sur la fourche 13. Le ou les deuxièmes rails de guidage 32 sont fixés parallèles à l'axe Y pour monter en translation selon l'axe Y le premier élément élastique 12 à la fourche 13.

De préférence, comme représenté sur la figure 5 et la figure 6, le support de fixation 10 comprend deux premiers rails de guidage 31 parallèles à l'axe X et deux deuxièmes rails de guidage 32 parallèles à l'axe Y.

Selon le deuxième mode de réalisation, le système de manipulation 1 peut comprendre un dispositif élastique (non représenté) liant le dispositif de soutien 11 à la pièce de fixation 9. Le dispositif élastique est configuré pour autoriser un déplacement de la pièce de fixation 9 par rapport au dispositif de soutien 11 selon un axe parallèle à l'axe X et selon un axe parallèle à l'axe Y autour d'une position nominale. Le dispositif élastique présente une raideur prédéterminée de façon que le déplacement de la pièce de fixation 9 présente une amplitude de déplacement prédéterminée autour de la position nominale de la pièce de fixation 9 par rapport au dispositif de soutien 11. Le dispositif élastique peut comprendre deux éléments élastiques destiné à permettre ledit déplacement de la pièce de fixation 9 par rapport au dispositif de soutien 11 selon un axe parallèle à l'axe X et selon un axe parallèle à l'axe Y autour d'une position nominale, respectivement.

La pièce de fixation 9, quant à elle, peut comprendre un cadre de fixation 33 et une barre de fixation 35.

Le cadre de fixation 33 comporte au moins un montant 34 conformé pour épouser, au moins en partie, la surface externe E de la coque latérale 2. Le ou les montants 34 sont destinés à fixer la pièce de fixation 9 sur la surface externe E de la coque latérale 2. La barre de fixation 35 présente un axe longitudinal parallèle à l'axe X. La barre de fixation 35 est fixée au premier élément élastique 12.

La pièce de fixation 9 peut comprendre également une première traverse de guidage 36 présentant un axe longitudinal parallèle à l'axe Z. La première traverse de guidage 36 présente une première extrémité 38 montée en rotation autour de l'axe X à la fourche 13. La première traverse de guidage 36 présente une deuxième extrémité 39 montée en translation à la barre de fixation 35.

Par exemple, le premier élément élastique 12 comprend au moins un ressort hélicoïdal 121.

Selon le premier mode de réalisation décrit ci-dessus, le ressort de compression 121 est un ressort hélicoïdal de compression. Le ressort hélicoïdal de compression tend à écarter ses extrémités opposées lorsqu'il subit une compression axiale. Ledit ressort hélicoïdal 121 présente une première extrémité 122 (correspondant à une extrémité inférieure du ressort hélicoïdal 121) fixée à la fourche 13 et une deuxième extrémité 123 (correspondant à une extrémité supérieure du ressort hélicoïdal 121) fixée à la barre de fixation 35. Le ressort hélicoïdal 121 entoure la première traverse de guidage 36, c'est-à-dire, le ressort hélicoïdal 121 présenté un axe central confondu avec l'axe central de la première traverse de guidage 36.

La pièce de fixation 9 comprend en outre au moins une deuxième traverse de guidage 37 parallèle à la première traverse de guidage 36.

Comme représenté sur la figure 2, le premier élément élastique 12 comprend deux deuxièmes traverses de guidage 37. Les deux deuxièmes traverses de guidage 37 et la première traverse de guidage 36 présentent des axes longitudinaux compris dans un plan commun parallèle à l'axe X et à l'axe Z. La première traverse de guidage 36 se situe entre les deux deuxièmes traverses de guidage 37.

La deuxième traverse de guidage 37 présente une première extrémité 40 montée en rotation autour de l'axe X à la fourche 13. La deuxième traverse de guidage 37 présente aussi une deuxième extrémité 41 montée en translation à la barre de fixation 35. Ainsi, la barre de fixation 35 appuie donc sur le ressort hélicoïdal 121 selon l'axe Z. Le ressort hélicoïdal 121 en appui sur la fourche 13 est configuré pour exercer une force selon l'axe Z vers le haut contre la barre de fixation 35 pour pousser la barre de fixation 35 vers le haut.

Selon le deuxième mode de réalisation décrit ci-dessus, le ressort de traction 121 est un ressort hélicoïdal de traction. Le ressort hélicoïdal de traction tend à rapprocher ses extrémités opposées lorsqu'il subit une traction axiale. La pièce de fixation 9 comprend en outre une traverse de guidage 42 présentant un axe longitudinal parallèle à l'axe Z. La traverse de guidage 42 présente une première extrémité 43 et une deuxième extrémité 44.

La première extrémité 43 de la traverse de guidage 42 est fixée à la barre de fixation 35. La traverse de guidage 42 traverse la fourche 13 entre la première extrémité 43 de la traverse de guidage 42 et la deuxième extrémité 44 de la traverse de guidage 44. Le ressort hélicoïdal 121 présente une première extrémité (correspondant à une extrémité supérieure du ressort hélicoïdal 121) fixée à la deuxième extrémité 44 de la traverse de guidage 42 et une deuxième extrémité 122 (correspondant à une extrémité inférieure du ressort hélicoïdal 121) fixée à la barre de fixation 35. Le ressort hélicoïdal 121 entoure la traverse de guidage 42. Ainsi, la barre de fixation 35 est suspendue au ressort hélicoïdal 121 selon l'axe Z. Le ressort hélicoïdal 121 exerce une force selon l'axe Z vers le haut pour tirer la barre de fixation 35 vers le haut.

Le système de manipulation 1 peut comprendre en outre au moins une structure de maintien 45 configurée pour maintenir la forme de la coque latérale 2. Comme représenté sur la figure 3, la figure 4 et la figure 11, la structure de maintien 45 comprend une barre courbe 46, une barre droite 48 et une contrefiche 49.

La barre courbe 46 est en forme d'arc. La forme d'arc correspond à une forme sensiblement conforme à la surface intérieure de la coque latérale 2. La barre courbe 46 est destinée à être fixée à la coque latérale 2 de façon qu'elle se trouve dans un plan perpendiculaire à l'axe X. La barre courbe 46 présentant une première extrémité 461 destiné à être fixée à un bord supérieur 47 de la coque latérale 2 et une deuxième extrémité 462 destinée à être fixée sur une surface interne I de la coque latérale 2. La barre courbe 46 est fixée à la coque latérale 2 de façon que la courbure de la barre courbe 46 suive parallèlement la courbure de la surface interne I de la coque latérale 2.

La barre droite 48 présente deux extrémités 481, 482 fixées respectivement à la première extrémité 461 de la barre courbe 46 et à la deuxième extrémité 462 de la barre courbe 46.

La contrefiche 49 présente une première extrémité 491 comportant une plaque 492 fixée à la barre courbe 46 et la barre droite 48. La plaque 492 est comprise dans un plan comprenant la barre courbe 46 et la barre droite 48. La contrefiche 49 comprend en outre une deuxième extrémité 493 destinée à être fixée à la surface interne I de la coque latérale 2. La contrefiche 49 présente un axe longitudinal faisant un angle non nul avec la plaque 492. La contrefiche 49 permet de maintenir en position la structure de maintien 45.

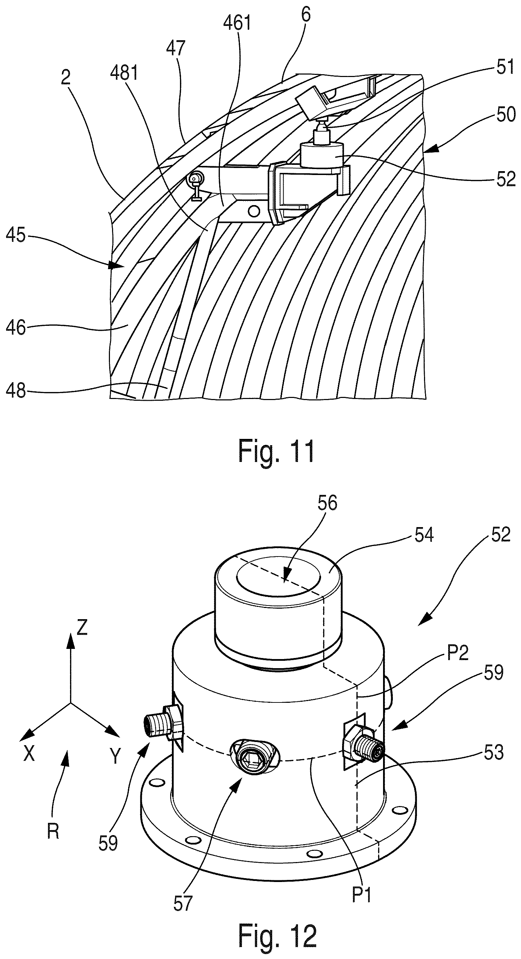

De plus, le système de manipulation 1 peut comprendre au moins un module d'alignement 50 comme représenté sur la figure 11.

La module d'alignement 50 comprend un pion d'alignement 51 (figure 11) et une interface de réception 52 (figures 11 à 14 et figure 3).

Le pion d'alignement 51 est fixé sur une surface interne de la coque supérieure 6. L'interface de réception 52 comporte un cylindre 53 fixé à la première extrémité 461 de la barre courbe 46, un premier piston 54 et un cinquième élément élastique 55. Le premier piston 54 est apte à coulisser dans le cylindre 53. Le premier piston 54 comporte une surface de réception 56 destinée à recevoir le pion d'alignement 51. La surface de réception 56 reçoit le pion d'alignement 51 quand la coque supérieure 6 est amenée sur les coques latérales 2.

Le cylindre 53 et le premier piston 54 présentent des axes longitudinaux L3 parallèles à l'axe Z. Le premier piston 54 est mobile en translation selon l'axe Z par rapport au cylindre 53 de l'interface de réception 52.

Le cinquième élément élastique 55 est configuré pour exercer une force selon l'axe Z contre le premier piston 54. Ladite force tendant à amener le premier piston 54 dans une position nominale selon l'axe Z si aucune force à part celle du cinquième élément élastique 55 n'est appliquée sur la surface de réception 56. Ladite force est par exemple appliquée par le pion d'alignement 51 qui est fixé à la coque supérieure 6.

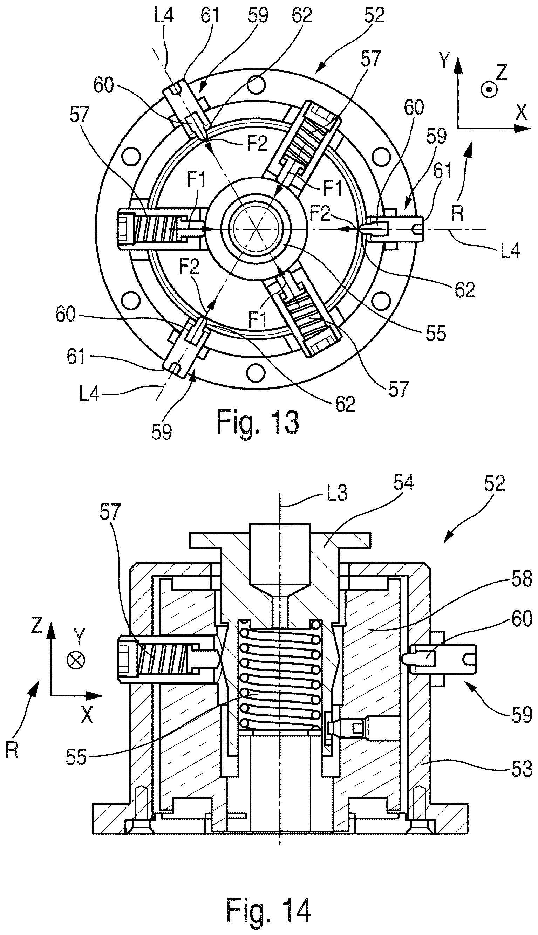

L'interface de réception 52 peut comprendre en outre au moins un sixième élément élastique 57 configuré pour exercer une force F1 dans un plan parallèle à l'axe X et l'axe Y contre le premier piston 54 (figure 13). Ladite force F1 tend à amener le premier piston 54 dans une position nominale selon l'axe X et l'axe Y. Ce ou ces septièmes éléments élastiques 57 permettent de laisser une amplitude de déplacement du premier piston 54 dans un plan parallèle à l'axe X et l'axe Y afin de faciliter la réception du pion d'alignement 51 sur la surface de réception 56.

L'interface de réception 52 comprend en outre un deuxième piston 58 et au moins un élément de réglage 59.

Le deuxième piston 58 présente un axe longitudinal parallèle à l'axe Z. Le deuxième piston 58 est mobile en translation dans un plan parallèle à l'axe X et l'axe Y par rapport au cylindre 53 de l'interface de réception 52. Le deuxième piston 58 est en outre fixe en translation selon l'axe Z. Le premier piston 54 est apte à coulisser dans le deuxième piston 58.

Le ou les éléments de réglage 59 sont configurés pour ajuster une position du deuxième piston 58 dans un plan parallèle à l'axe X et à l'axe Y en appliquant une force F2 contre le deuxième piston 58. Ainsi, grâce à l'élément de réglage ou aux éléments de réglage 59, il est possible d'ajuster la position nominale du deuxième piston 58 dans le plan parallèle à l'axe X et à l'axe Y et, par conséquent, la position nominale du premier piston 54 et de la surface de réception 56 dans le plan parallèle à l'axe X et à l'axe Y.

Selon un mode de réalisation non limitatif représenté sur la figure 12, la figure 13 et la figure 14, l'interface de réception 52 comprend trois éléments de réglage 59 et trois éléments élastiques 57.

La figure 13 correspond à une coupe de l'interface de réception 52 selon le plan P1. La figure 14 correspond à une coupe de l'interface de réception 52 selon le plan P2.

Les trois éléments de réglage 59 sont répartis régulièrement autour du cylindre 53. Par exemple, ils sont répartis à 120° l'un par rapport à l'autre. Chacun des trois éléments de réglage 59 comprend une vis 60 vissée dans une ouverture à travers le cylindre 53. La vis 60 de chacun des trois éléments de réglage 59 présente des axes longitudinaux L4 compris dans un plan commun parallèle à l'axe X et à l'axe Y. Les axes longitudinaux L4 de chaque vis 60 sont concourants. La vis 60 de chacun des trois éléments de réglage 59 comprend une première extrémité 61 configurée pour recevoir un outil permettant un vissage ou un dévissage de la vis 60 et une deuxième extrémité 62 configurée pour exercer contre le deuxième piston 58 une force F2 parallèle à l'axe longitudinal L4 de la vis 60 en fonction du vissage et du dévissage de la vis 60.

Les trois éléments élastiques 57 sont répartis régulièrement autour du cylindre 53. Par exemple, ils sont répartis à 120° l'un par rapport à l'autre. Chacun des septièmes éléments élastiques 57 est apte à exercer une force F1 contre le premier piston 54.

Le système de manipulation 1 peut également comprendre au moins une pièce de fixation auxiliaire 63, comme représenté sur la figure 7. La pièce de fixation auxiliaire 63 est destinée à être fixée sur la surface externe E de la coque latérale 2. La pièce de fixation auxiliaire 63 est en outre destinée à être posée sur un dispositif de support 70 de la plateforme d'assemblage 5, ce dispositif de support 70 étant disposé entre deux dispositifs de maintien 11 de la plateforme d'assemblage 5. Le dispositif de support 70 peut correspondre à un mât de support. La pièce de fixation auxiliaire 63 peut être posée au sommet du mât de support. La pièce de fixation auxiliaire 63 peut comprendre un ensemble comportant deux montants de fixation 64 reliés entre eux par une barre de soutien 69. Les deux montants de fixation 64 sont destinés à être parallèle à l'axe Z. La barre de soutien 69 est destinée à être parallèle à l'axe X. La pièce de fixation auxiliaire 63 comprend en outre au moins un module amortisseur 71 destiné à être posé sur le dispositif de support 70.

Le module amortisseur 71 comprend un pied 65 et un septième élément élastique 66 (par exemple un ressort) reliant le pied à la barre de soutien 69. Le septième élément élastique 66 présente une raideur prédéterminée de façon que le déplacement dudit ensemble comportant les deux montants de fixation 64 et la barre de soutien 69 présente une amplitude de déplacement prédéterminée selon l'axe Z autour d'une position nominale dudit ensemble par rapport au pied 65. Par exemple, la position nominale dudit ensemble correspond à une position dans laquelle ledit ensemble n'est pas sollicité par une force à part celle du septième élément élastique 66. Le module amortisseur 71 peut également comprendre un élément d'ajustement 67 de la raideur du septième élément élastique 66.

La présence ou l'absence de la pièce de fixation auxiliaire 63 peut dépendre de la longueur du corps de fuselage 3 à assembler et donc du nombre de dispositifs de support 70.

Le système de manipulation 1 peut être utilisé grâce au procédé d'assemblage suivant (figure 16).

Le procédé d'assemblage peut comprendre :
- une étape E1 d'installation d'une coque inférieure 4 du corps de fuselage 3 sur une plateforme d'assemblage 5,
- une étape E2 de fixation de deux coques latérales 2 du corps de fuselage 3. Chacune des deux coques latérales 2 est fixée à deux dispositifs de fixation 7 d'un système de manipulation 1. Chacune des deux coques latérales 2 est fixée aux deux dispositifs de fixation 7 à l'aide de la pièce de fixation 9 de chacun des deux dispositifs de fixation 7,
- une étape E3 d'alignement des deux coques latérales 2 par rapport à la coque inférieure 5 selon un plan comprenant l'axe X et l'axe Y en manipulant les deux coques latérales 2 à l'aide du support de fixation 10,
- une étape E4 d'alignement des deux coques latérales 2 par rapport à la coque inférieure 5 selon un axe parallèle à l'axe Z en manipulant les deux coques latérales 2 à l'aide du premier élément élastique 12,
- une étape E5 d'assemblage des deux coques latérale 2 à la coque inférieure 5. Le procédé d'assemblage peut aussi comprendre :
- une étape E6 de fixation d'au moins une structure de maintien 45 du système de manipulation 1 à la surface interne de chacune des coques latérales 2,
- une étape E7 de fixation d'au moins un pion d'alignement 51 sur la surface interne d'une coque supérieure 6 du corps de fuselage 3,
- une étape E9 de dépôt du pion d'alignement 51 sur la surface de réception 52 en approchant la coque supérieure 6 aux coques latérales 2,
- une étape E10 d'alignement de la coque supérieure 6 par rapport aux coques latérales 2 selon un plan comprenant l'axe X et l'axe Y à l'aide de l'interface de réception 52 du module d'alignement 50,
- une étape E11 d'assemblage de la coque supérieure 6 aux coques latérales 2. Le procédé peut également comprendre une étape E8 de mise en place d'une grille de plancher G de l'aéronef AC avant l'étape E9.

## Revendications

1. Système de manipulation (1) destiné à manipuler une coque latérale (2) d'un aéronef en vue d'un assemblage d'un corps de fuselage (3) de l'aéronef, la coque latérale (2) étant configurée pour être assemblée au moins à une coque inférieure (4) de l'aéronef et une coque supérieure (6), le corps de fuselage (3) après assemblage étant lié à un repère orthogonal (R) défini par un axe X parallèle à un axe longitudinal (L1) du corps de fuselage (3), un axe Y horizontal et un axe Z vertical,
le système de manipulation (1) comprenant au moins deux dispositifs de fixation (7) par coque latérale (2), chacun des dispositifs de fixation (7) étant destiné à être fixé à une extrémité longitudinale (8) de la coque latérale (2), chacun des dispositifs de fixation (7) comportant une pièce de fixation (9), un support de fixation (10) et un premier élément élastique (12) ;
- la pièce de fixation (9) étant destinée à être fixée sur une surface externe (E) de la coque latérale (2) ;
- le support de fixation (10) étant destiné à être monté sur un dispositif de soutien (11) d'une plateforme d'assemblage (5), le support de fixation (10) étant configuré pour que la pièce de fixation (9) et le premier élément élastique (12) soient mobiles en translation, dans un plan comprenant l'axe X et l'axe Y par rapport au dispositif de soutien (11) sur lequel le support de fixation (10) est destiné à être monté ;
- le premier élément élastique (12) étant fixé à la pièce de fixation (9) et au support de fixation (10), le premier élément élastique (12) étant configuré pour autoriser un déplacement de la pièce de fixation (9) par rapport au dispositif de soutien (11) selon un axe parallèle à l'axe Z autour d'une position nominale, le premier élément élastique (12) présentant une raideur prédéterminée de façon que le déplacement de la pièce de fixation (9) présente une amplitude de déplacement prédéterminée autour de la position nominale de la pièce de fixation (9) par rapport au support de fixation (10),
**caractérisé en ce que** le support de fixation (10) comprend une première extrémité (131) et une deuxième extrémité (132) opposée à la première extrémité (131), la première extrémité (131) étant destinée à être montée rotative par rapport au dispositif de soutien (11) autour d'un axe (L2) parallèle à l'axe X et montée en translation selon l'axe Y par rapport au dispositif de soutien (11).

2. Système selon la revendication 1,
**caractérisé en ce que** le support de fixation (10) comprend en outre :
- une fourche (13) comportant la première extrémité (131) et la deuxième extrémité (132) opposée à la première extrémité (131), la première extrémité (131) étant destinée à être montée rotative sur une tige (14) d'un dispositif référentiel de positionnement (15) et en translation selon l'axe Y par rapport à la tige (14), le dispositif référentiel de positionnement (15) étant destiné à être monté fixe sur le dispositif de maintien (11) sur lequel est monté le dispositif de fixation (7), la tige (14) présentant un axe longitudinal (L2) parallèle à l'axe X, la tige (14) étant mobile en translation selon l'axe X, la pièce de fixation (9) étant liée à la fourche (13) par l'intermédiaire du premier élément élastique (12) entre la première extrémité (131) et la deuxième extrémité (132) de la fourche 13 ;
- un vérin mécanique (16) monté fixe en translation selon l'axe Z sur le support de fixation (10), le vérin mécanique (16) comprenant un piston (17) configuré pour être entraîné par le vérin mécanique (16) selon l'axe Z, le piston (17) comprenant une extrémité libre destiné à être fixée à la deuxième extrémité (132) de la fourche (13) ;
la fourche (13) étant apte à entrer en rotation autour de l'axe longitudinal (L2) de la tige (14) quand le piston (17) est entraîné par le vérin mécanique (16) selon l'axe Z, la rotation de la fourche (13) étant apte à entraîner une rotation de la coque latérale (2) autour de l'axe longitudinal (L1) du corps de fuselage (3).

3. Système selon l'une quelconque des revendications 1 et 2,
**caractérisé en ce que** le premier élément élastique (12) comprend un ressort de compression (121) présentant une extrémité supérieure fixée à la pièce de fixation (9) et une extrémité inférieure fixée au support de fixation (10), l'extrémité inférieure étant en appui sur le support de fixation (10), le ressort de compression (121) étant configuré pour exercer une force d'expansion selon l'axe Z vers le haut contre la pièce de fixation (9) au niveau de son extrémité supérieure.

4. Système selon l'une quelconque des revendications 1 à 3,
**caractérisé en ce que** le support de fixation (10) comprend une chape (19), la chape présentant deux jambes (191, 192) et une plaque (193) reliant les deux jambes (191, 192), la chape (19) étant montée en translation selon l'axe Y sur le dispositif de maintien (11), la chape (19) étant liée au dispositif de maintien par une première extrémité (194, 195) des deux jambes (191, 192), la plaque (193) liant les deux jambes (191, 192) à une deuxième extrémité (196, 197) des deux jambes (191, 192) opposée à la première extrémité (194, 195) des deux jambes (191, 192), les deux jambes (191, 192) comprenant chacune une ouverture circulaire (20, 21), l'ouverture circulaire (20, 21) de chacune des deux jambes (191, 192) présentant chacun un centre aligné selon un axe parallèle à l'axe X, l'ouverture circulaire (20, 21) de chacune des deux jambes (191, 192) étant destinée à recevoir une goupille (22),
le vérin mécanique (16) étant fixé sur la plaque (193) de la chape (19) de façon que l'extrémité libre du piston (17) du vérin mécanique (16) se trouve entre les deux jambes (191, 192) de la chape (19), l'extrémité libre du piston (17) du vérin mécanique (16) présentant un anneau (23) destiné à recevoir la goupille (22), l'extrémité libre du piston (17) du vérin mécanique (16) étant configurée pour être fixée à la deuxième extrémité (132) de la fourche (13) par l'introduction de la goupille (22) dans l'ouverture circulaire (20, 21) de chacune des deux jambes (191, 192) et dans l'anneau (23).

5. Système selon la revendication 1 ou la revendication 2 et l'une quelconque des revendications 3 à 4,
**caractérisé en ce que** le support de fixation (10) comprend en outre :
- un élément de fixation (24) destiné à être fixé au dispositif de maintien (11) ;
- un deuxième élément élastique (25) liant la chape (19) à l'élément de fixation (24), le deuxième élément élastique (25) étant configuré pour autoriser un déplacement (26) de la chape (19) par rapport à l'élément de fixation (24) selon un axe parallèle à l'axe Y, le deuxième élément élastique (25) présentant une raideur prédéterminée de façon que le déplacement (26) présente une amplitude prédéterminée autour d'une position nominale de la chape (19) par rapport à l'élément de fixation (24) ;
la première extrémité (131) de la fourche (13) comprenant :
- une portion de support (27) destinée à être monté rotatif sur la tige (14) du dispositif référentiel de positionnement (15) ;
- un troisième élément élastique (28), le troisième élément élastique (28) liant la deuxième extrémité (132) de la fourche (13) et la portion de support (27), le troisième élément élastique (28) étant configuré pour autoriser un déplacement (29) de la fourche (13) par rapport à la portion de support (27) selon un axe parallèle à l'axe Y, le troisième élément élastique (28) présentant une raideur prédéterminée de façon que le déplacement (29) présente une amplitude prédéterminée autour d'une position nominale de la fourche (13) par rapport à la portion de support (27).

6. Système selon l'une quelconque des revendications 3 à 5,
**caractérisé en ce qu'**il comprend un quatrième élément élastique liant le dispositif de soutien (11) à la pièce de fixation (9), le quatrième élément élastique étant configuré pour autoriser un déplacement de la pièce de fixation (9) par rapport au dispositif de soutien (11) selon un axe parallèle à l'axe X autour d'une position nominale, le quatrième élément élastique présentant une raideur prédéterminée de façon que le déplacement de la pièce de fixation (9) présente une amplitude de déplacement prédéterminée autour de la position nominale de la pièce de fixation (9) par rapport au dispositif de soutien (11).

7. Système selon l'une quelconque des revendications 1 et 2,
**caractérisé en ce que** le premier élément élastique (12) comprend un ressort de traction (121) présentant une extrémité supérieure fixée au support de fixation (10) et une extrémité inférieure fixée à la pièce de fixation (9), l'extrémité inférieure étant fixée en suspension au support de fixation (10), le ressort de traction (121) étant configuré pour exercer une force de traction selon l'axe Z vers le haut sur la pièce de fixation (9) au niveau de son extrémité inférieure.

8. Système selon les revendications 1, 2 et 7,
**caractérisé en ce que** le support de fixation (10) comprend un élément de fixation (24) destiné à être fixé au dispositif de maintien (11), le vérin mécanique (16) étant monté en translation selon l'axe X à l'élément de fixation (24),
le premier élément élastique (12) étant monté en translation à la fourche (13) selon l'axe Y.

9. Système selon l'une des revendications 1 ou 2 et l'une quelconque des revendications 7 et 8,
**caractérisé en ce que** le support de fixation (10) comprend au moins un premier rail de guidage (31) fixé sur l'élément de fixation (24) parallèle à l'axe X pour monter en translation selon l'axe X le vérin mécanique (16) à l'élément de fixation (24),
le support de fixation (10) comprend au moins un deuxième rail de guidage (32) fixé sur la fourche (13) parallèle à l'axe Y pour monter en translation selon l'axe Y le premier élément élastique (12) à la fourche (13).

10. Système selon l'une quelconque des revendications 7 à 9,
**caractérisé en ce qu'**il comprend un dispositif élastique liant le dispositif de soutien (11) à la pièce de fixation (9), le dispositif élastique étant configuré pour autoriser un déplacement de la pièce de fixation (9) par rapport au dispositif de soutien (11) selon un axe parallèle à l'axe X et selon un axe parallèle à l'axe Y autour d'une position nominale, le dispositif élastique présentant une raideur prédéterminée de façon que le déplacement de la pièce de fixation (9) présente une amplitude de déplacement prédéterminée autour de la position nominale de la pièce de fixation (9) par rapport au dispositif de soutien (11).

11. Système selon l'une quelconque des revendications 1 à 10,
**caractérisé en ce que** la pièce de fixation (9) comprend :
- un cadre de fixation (33) comportant au moins un montant (34) conformé pour épouser au moins en partie la surface externe (E) de la coque latérale (2), le ou les montants (34) étant destinés à fixer la pièce de fixation (9) sur la surface externe (E) de la coque latérale (2) ;
- une barre de fixation (35) présentant un axe longitudinal parallèle à l'axe X, la barre de fixation (35) étant fixée au premier élément élastique (12).

12. Système selon l'une quelconque des revendications 1 à 11,
**caractérisé en ce que** le premier élément élastique (12) comprend au moins un ressort hélicoïdal (121).

13. Système selon les revendications 1 ou 2 et la revendication 12,
**caractérisé en ce que** la pièce de fixation (9) comprend en outre une première traverse de guidage (36) présentant un axe longitudinal parallèle à l'axe Z, la première traverse de guidage (36) présentant une première extrémité (38) montée en rotation autour de l'axe X à la fourche (13), la première traverse de guidage (36) présentant une deuxième extrémité (39) montée en translation à la barre de fixation (35), le ressort hélicoïdal (121) présentant une première extrémité (122) fixée à la fourche (13) et une deuxième extrémité (123) fixée à la barre de fixation (35), le ressort hélicoïdal (121) entourant la première traverse de guidage (36), le premier élément élastique (12) comprend en outre au moins une deuxième traverse de guidage (37) parallèle à la première traverse de guidage (36), la deuxième traverse de guidage (37) présentant une première extrémité (40) montée en rotation autour de l'axe X à la fourche (13), la deuxième traverse de guidage (37) présentant une deuxième extrémité (41) montée en translation à la barre de fixation (35).

14. Système selon les revendications 1 ou 2 et la revendication 12,
**caractérisé en ce que** la pièce de fixation (9) comprend en outre une traverse de guidage (42) présentant un axe longitudinal parallèle à l'axe Z, la traverse de guidage (42) présentant une première extrémité (43) et une deuxième extrémité (44), la première extrémité (43) de la traverse de guidage (42) étant fixée à la barre de fixation (35), la traverse de guidage (42) traversant la fourche (13) entre sa première extrémité (43) et sa deuxième extrémité (44), le ressort hélicoïdal (121) présentant une première extrémité fixée à la deuxième extrémité (44) de la traverse de guidage (42) et une deuxième extrémité fixée à la barre de fixation (35), le ressort hélicoïdal (121) entourant la traverse de guidage (42).

15. Système selon l'une quelconque des revendications 1 à 14,
**caractérisé en ce qu'**il comprend en outre au moins une structure de maintien (45) configurée pour maintenir la forme de la coque latérale (2), la structure de maintien (45) comprenant :
- une barre courbe (46) en forme d'arc destinée à être fixée à la coque latérale (2) de façon qu'elle se trouve dans un plan perpendiculaire à l'axe X, la barre courbe (46) présentant une première extrémité (461) destiné à être fixée à un bord supérieur (47) de la coque latérale (2) et une deuxième extrémité (462) destinée à être fixée sur une surface interne (I) de la coque latérale (2) ;
- une barre droite (48) présentant deux extrémités (481, 482) fixées respectivement à la première extrémité (461) de la barre courbe (46) et à la deuxième extrémité (462) de la barre courbe (46) ;
- une contrefiche (49) présentant une première extrémité (491) comportant une plaque (492) fixée à la barre courbe (46) et la barre droite (48), la plaque (492) étant comprise dans un plan comprenant la barre courbe (46) et la barre droite (48), la contrefiche (49) comprenant en outre une deuxième extrémité (493) destinée à être fixée à la surface interne (I) de la coque latérale (2), la contrefiche (49) présentant un axe longitudinal faisant un angle non nul avec la plaque (492).

16. Système selon l'une quelconque des revendications 1 à 15,
**caractérisé en ce qu'**il comprend en outre au moins un module d'alignement (50) comprenant :
- un pion d'alignement (51) destiné à être fixé sur une surface interne de la coque supérieure (6) ;
- une interface de réception (52) comportant un cylindre (53) destiné à être fixé à la première extrémité (461) de la barre courbe (46), un premier piston (54) et un cinquième élément élastique (55), le premier piston (54) étant apte à coulisser dans le cylindre (53), le premier piston (54) comportant une surface de réception (56) destinée à recevoir le pion d'alignement (51), le cylindre (53) et le premier piston (54) présentant des axes longitudinaux (L3) parallèles à l'axe Z, le premier piston (54) étant mobile en translation selon l'axe Z par rapport au cylindre (53) de l'interface de réception (52), le cinquième élément élastique (55) étant configuré pour exercer une force selon l'axe Z contre le premier piston (54), ladite force tendant à amener le premier piston (54) dans une position nominale selon l'axe Z si aucune force n'est appliquée sur la surface de réception (56).

17. Système selon la revendication 16,
**caractérisé en ce que** l'interface de réception (52) comprend en outre au moins un sixième élément élastique (57) configuré pour exercer une force dans un plan parallèle à l'axe X et l'axe Y contre le premier piston (54), ladite force tendant à amener le premier piston (54) dans une position nominale selon l'axe X et l'axe Y.

18. Système selon l'une quelconque des revendications 16 et 17,
**caractérisé en ce que** l'interface de réception (52) comprend en outre :
- un deuxième piston (58) présentant un axe longitudinal parallèle à l'axe Z, le deuxième piston (58) étant mobile en translation dans un plan parallèle à l'axe X et l'axe Y par rapport au cylindre (3) de l'interface de réception (52) et fixe selon l'axe Z, le premier piston (54) étant apte à coulisser dans le deuxième piston (58) ;
- au moins un élément de réglage (59) configuré pour ajuster une position du deuxième piston (58) dans un plan parallèle à l'axe X et à l'axe Y.

19. Système selon l'une quelconque des revendications 16 à 18,
**caractérisé en ce que** le module d'alignement (50) comprend :
- trois éléments de réglage (59) répartis régulièrement autour du cylindre (53), chacun des trois éléments de réglage (59) comprend une vis (60) vissée dans une ouverture à travers le cylindre (53), la vis (60) de chacun des trois éléments de réglage (59) présentant des axes longitudinaux (L4) compris dans un plan commun parallèle à l'axe X et à l'axe Y, les axes longitudinaux (L4) de chaque vis (60) étant concourants, la vis (60) de chacun des trois éléments de réglage (59) comprenant une première extrémité (61) configurée pour recevoir un outil permettant un vissage ou un dévissage de la vis (60) et une deuxième extrémité (62) configurée pour exercer contre le deuxième piston (58) une force parallèle à l'axe longitudinal (L4) de la vis (60) en fonction du vissage et du dévissage de la vis (60) ;
- trois septièmes éléments élastiques (57) répartis régulièrement autour du cylindre (53), chacun des septièmes éléments élastiques (57) étant apte à exercer une force contre le premier piston (54).

20. Procédé d'assemblage d'un corps de fuselage d'un aéronef à l'aide du système de manipulation selon l'une quelconque des revendications 1 à 19, comprenant :
- une étape (E1) d'installation d'une coque inférieure (4) du corps de fuselage (3) sur une plateforme d'assemblage (5),
- une étape (E2) de fixation de deux coques latérales (2) du corps de fuselage (3), chacune des deux coques latérales (2) étant fixée à deux dispositifs de fixation (7) du système de manipulation (1), chacune des deux coques latérales (2) étant fixée aux deux dispositifs de fixation (7) à l'aide de la pièce de fixation (9) de chacun des deux dispositifs de fixation (7),
- une étape (E3) d'alignement des deux coques latérales (2) par rapport à la coque inférieure (5) selon un plan comprenant l'axe X et l'axe Y en manipulant les deux coques latérales (2) à l'aide du support de fixation (10) du système de manipulation (1),
- une étape (E4) d'alignement des deux coques latérales (2) par rapport à la coque inférieure (5) selon un axe parallèle à l'axe Z en manipulant les deux coques latérales (2) à l'aide du premier élément élastique (12) du système de manipulation (1),
- une étape (E5) d'assemblage des deux coques latérale (2) à la coque inférieure (5).

21. Procédé selon la revendication 20,
**caractérisé en ce qu'**il comprend en outre les étapes suivantes :
- une étape (E6) de fixation d'au moins une structure de maintien (45) du système de manipulation (1) à la surface interne de chacune des coques latérales (2),
- une étape (E7) de fixation d'au moins un pion d'alignement (51) sur la surface interne d'une coque supérieure (6) du corps de fuselage (3),
- une étape (E9) de dépôt du pion d'alignement (51) sur la surface de réception (52) en approchant la coque supérieure (6) aux coques latérales (2),
- une étape (E10) d'alignement de la coque supérieure (6) par rapport aux coques latérales (2) selon un plan comprenant l'axe X et l'axe Y à l'aide de l'interface de réception (52) du module d'alignement (50),
- une étape (E11) d'assemblage de la coque supérieure (6) aux coques latérales (2).

22. Procédé selon la revendication 21,
**caractérisé en ce qu'**il comprend en outre une étape (E8) de mise en place d'une grille de plancher (G) de l'aéronef (AC) avant l'étape (E9) de dépôt.

## Patentansprüche

1. Handhabungssystem (1), das dazu bestimmt ist, eine Seitenschale (2) eines Luftfahrzeugs in Hinblick auf eine Montage eines Rumpfkörpers (3) des Luftfahrzeugs handzuhaben, wobei die Seitenschale (2) konfiguriert ist, um mindestens an eine untere Schale (4) des Luftfahrzeugs, und eine obere Schale (6) montiert zu werden, wobei der Rumpfkörper (3) nach der Montage mit einem orthogonalen Bezugspunkt (R) verbunden ist, der durch eine Achse X parallel zu einer Längsachse (L1) des Rumpfkörpers (3), eine horizontale Achse Y und eine vertikale Achse Z definiert wird,
wobei das Handhabungssystem (1) mindestens zwei Befestigungsvorrichtungen (7) je Seitenschale (2) umfasst, wobei jede der Befestigungsvorrichtungen (7) dazu bestimmt ist, an einem Längsende (8) der Seitenschale (2) befestigt zu werden, wobei jede der Befestigungsvorrichtungen (7) ein Befestigungsstück (9), eine Befestigungshalterung (10) und ein erstes elastisches Element (12) beinhaltet;
- wobei das Befestigungsstück (9) dazu bestimmt ist, an einer Außenoberfläche (E) der Seitenschale (2) befestigt zu werden;
- wobei die Befestigungshalterung (10) dazu bestimmt ist, an einer Stützvorrichtung (11) einer Montageplattform (5) angebracht zu werden, wobei die Befestigungshalterung (10) konfiguriert ist, damit das Befestigungsstück (9) und das erste elastische Element (12) in einer Ebene, welche die Achse X und die Achse Y umfasst, in Bezug auf die Stützvorrichtung (11) verschiebbar sind, auf der die Befestigungshalterung (10) bestimmt ist, angebracht zu werden;
- wobei das erste elastische Element (12) am Befestigungsstück (9) und an der Befestigungshalterung (10) befestigt ist, wobei das erste elastische Element (12) konfiguriert ist, um ein Verfahren des Befestigungsstücks (9) in Bezug auf die Stützvorrichtung (11) entlang einer Achse parallel zur Achse Z um eine nominale Position zuzulassen, wobei das erste elastische Element (12) eine vorbestimmte Steifigkeit aufweist, sodass das Verfahren des Befestigungsstücks (9) einen vorbestimmten Verfahrbereich um die nominale Position des Befestigungsstücks (9) in Bezug auf die Befestigungshalterung (10) aufweist,
**dadurch gekennzeichnet, dass** die Befestigungshalterung (10) ein erstes Ende (131) und ein zweites Ende (132) gegenüber dem ersten Ende (131) umfasst, wobei das erste Ende (131) dazu bestimmt ist, in Bezug auf die Stützvorrichtung (11) um eine Achse (L2) parallel zur Achse X drehend angebracht zu werden, und entlang der Achse Y in Bezug auf die Stützvorrichtung (11) verschiebbar angebracht zu werden.

2. System nach Anspruch 1,
**dadurch gekennzeichnet, dass** die Befestigungshalterung (10) weiter umfasst :
- eine Gabel (13), die das erste Ende (131) und das zweite Ende (132) gegenüber dem ersten Ende (131) beinhaltet, wobei das erste Ende (131) dazu bestimmt ist, drehend an einem Stab (14) einer Positionierungsbezugsvorrichtung (15) und entlang der Achse Y in Bezug auf den Stab (14) angebracht zu werden, wobei die Positionierungsbezugsvorrichtung (15) dazu bestimmt ist, feststehend auf der Stützvorrichtung (11) angebracht zu werden, auf der die Befestigungsvorrichtung (7) angebracht ist, wobei der Stab (14) eine Längsachse (L2) parallel zur Achse X aufweist, der Stab (14) entlang der Achse X verschiebbar ist, das Befestigungsstück (9) anhand des ersten elastischen Elements (12) zwischen dem ersten Ende (131 ) und dem zweiten Ende (132) der Gabel 13 mit der Gabel (13) verbunden ist;
- einen mechanischen Zylinder (16), der entlang der Achse Z unverschiebbar auf der Befestigungshalterung (10) angebracht ist, wobei der mechanische Zylinder (16) einen Kolben (17) umfasst, der konfiguriert ist, um vom mechanischen Zylinder (16) entlang der Achse Z angetrieben zu werden, wobei der Kolben (17) ein freies Ende umfasst, das dazu bestimmt ist, am zweiten Ende (132) der Gabel (13) befestigt zu werden;
wobei die Gabel (13) imstande ist, um die Längsachse (L2) des Stabs (14) in Drehung versetzt zu werden, wenn der Kolben (17) vom mechanischen Zylinder (16) entlang der Achse Z angetrieben wird, wobei die Drehung der Gabel (13) imstande ist, eine Drehung der Seitenschale (2) um die Längsachse (L1) des Rumpfkörpers (3) anzutreiben.

3. System nach einem der Ansprüche 1 und 2,
**dadurch gekennzeichnet, dass** das erste elastische Element (12) eine Kompressionsfeder (121) umfasst, die ein oberes Ende aufweist, das am Befestigungsstück (9) befestigt ist, und ein unteres Ende, das an der Befestigungshalterung (10) befestigt ist, wobei das untere Ende auf der Befestigungshalterung (10) aufliegt, wobei die Kompressionsfeder (121) konfiguriert ist, um eine Dehnungskraft entlang der Achse Z nach oben auf das Befestigungsstück (9) im Bereich seines oberen Endes auszuüben.

4. System nach einem der Ansprüche 1 bis 3,
**dadurch gekennzeichnet, dass** die Befestigungshalterung (10) einen Gabelkopf (19) umfasst, wobei der Gabelkopf zwei Schenkel (191, 192) und eine Platte (193) aufweist, welche die beiden Schenkel (191, 192) verbindet, wobei der Gabelkopf (19) entlang der Achse Y auf der Stützvorrichtung (11) verschiebbar angebracht ist, wobei der Gabelkopf (19) durch ein erstes Ende (194, 195) der beiden Schenkel (191, 192) mit der Stützvorrichtung verbunden ist, wobei die Platte (193) die beiden Schenkel (191,192) mit einem zweiten Ende (196,197) der beiden Schenkel (191,192) gegenüber dem ersten Ende (194, 195) der beiden Schenkel (191, 192) verbindet, wobei die beiden Schenkel (191, 192) jeweils eine kreisförmige Öffnung (20, 21) umfassen, wobei die kreisförmige Öffnung (20, 21) jedes der beiden Schenkel (191, 192) jeweils eine Mitte aufweist, die entlang einer Achse parallel zur Achse X ausgerichtet ist, wobei die kreisförmige Öffnung (20, 21 ) jedes der beiden Schenkel (191, 192) dazu bestimmt ist, einen Splint (22) aufzunehmen,
wobei der mechanische Zylinder (16) an der Platte (193) des Gabelkopfes (19) befestigt ist, sodass sich das freie Ende des Kolbens (17) des mechanischen Zylinders (16) zwischen den Schenkeln (191, 192) des Gabelkopfes (19) befindet, wobei das freie Ende des Kolbens (17) des mechanischen Zylinders (16) einen Ring (23) aufweist, der dazu bestimmt ist, den Splint (22) aufzunehmen, wobei das freie Ende des Kolbens (17) des mechanischen Zylinders (16) konfiguriert ist, um am zweiten Ende (132) der Gabel (13) durch Einführen des Splints (22) in der kreisförmigen Öffnung (20, 21 ) jedes der beiden Schenkel (191, 192) und im Ring (23) befestigt zu werden.

5. System nach Anspruch 1 oder Anspruch 2 und einem der Ansprüche 3 bis 4,
**dadurch gekennzeichnet, dass** die Befestigungshalterung (10) weiter umfasst:
- ein Befestigungselement (24), das dazu bestimmt ist, an der Stützvorrichtung (11) befestigt zu werden;
- ein zweites elastisches Element (25), das den Gabelkopf (19) mit dem Befestigungselement (24) verbindet, wobei das zweite elastische Element (25) konfiguriert ist, um ein Verfahren (26) des Gabelkopfes (19) in Bezug auf das Befestigungselement (24) entlang einer Achse parallel zur Achse Y zuzulassen, wobei das zweite elastische Element (25) eine vorbestimmte Steifigkeit aufweist, sodass das Verfahren (26) einen vorbestimmten Bereich um eine nominale Position des Gabelkopfes (19) in Bezug auf das Befestigungselement (24) aufweist;
wobei das erste Ende (131) der Gabel (13) umfasst:
- einen Stützabschnitt (27), der dazu bestimmt ist, drehend auf dem Stab (14) der Positionierungsbezugsvorrichtung (15) angebracht zu werden;
- ein drittes elastisches Element (28), wobei das dritte elastische Element (28) das zweite Ende (132) der Gabel (13) und den Stützabschnitt (27) verbindet, wobei das dritte elastische Element (28) konfiguriert ist, um ein Verfahren (29) der Gabel (13) in Bezug auf den Stützabschnitt (27) entlang einer Achse parallel zur Achse Y zuzulassen, wobei das dritte elastische Element (28) eine vorbestimmte Steifigkeit aufweist, sodass das Verfahren (29) einen vorbestimmten Bereich um eine nominale Position der Gabel (13) in Bezug auf den Stützabschnitt (27) aufweist;

6. System nach einem der Ansprüche 3 bis 5,
**dadurch gekennzeichnet, dass** es ein viertes elastisches Element umfasst, das die Stützvorrichtung (11) mit dem Befestigungsstück (9) verbindet, wobei das vierte elastische Element konfiguriert ist, um ein Verfahren des Befestigungsstücks (9) in Bezug auf die Stützvorrichtung (11) entlang einer Achse parallel zur Achse X um eine nominale Position zuzulassen, wobei das vierte elastische Element eine vorbestimmte Steifigkeit aufweist, sodass das Verfahren des Befestigungsstücks (9) einen vorbestimmten Verfahrbereich um die nominale Position des Befestigungsstücks (9) in Bezug auf die Stützvorrichtung (11) aufweist.

7. System nach einem der Ansprüche 1 und 2,
**dadurch gekennzeichnet, dass** das erste elastische Element (12) eine Zugfeder (121) umfasst, die ein oberes Ende aufweist, das an der Befestigungshalterung (10) befestigt ist, und ein unteres Ende, das am Befestigungsstück (9) befestigt ist, wobei das untere Ende hängend an der Befestigungshalterung (10) befestigt ist, wobei die Zugfeder (121) konfiguriert ist, um eine Zugkraft entlang der Achse Z nach oben auf das Befestigungsstück (9) im Bereich seines unteren Endes auszuüben.

8. System nach den Ansprüchen 1,2 und 7,
**dadurch gekennzeichnet, dass** die Befestigungshalterung (10) ein Befestigungselement (24) umfasst, das dazu bestimmt ist, an der Stützvorrichtung (11) befestigt zu werden, wobei der mechanische Zylinder (16) verschiebbar entlang der Achse X am Befestigungselement (24) angebracht ist,
wobei das erste elastische Element (12) verschiebbar an der Gabel (13) entlang der Achse Y angebracht ist.

9. System nach einem der Ansprüche 1 oder 2 und einem der Ansprüche 7 und 8,
**dadurch gekennzeichnet, dass** die Befestigungshalterung (10) mindestens eine erste Führungsschiene (31) umfasst, die am Befestigungselement (24) parallel zur Achse X befestigt ist, um den mechanischen Zylinder (16) entlang der Achse X am Befestigungselement (24) anzubringen, wobei die Befestigungshalterung (10) mindestens eine zweite Führungsschiene (32) umfasst, die auf der Gabel (13) parallel zur Achse Y befestigt ist, um das erste elastische Element (12) entlang der Achse Y verschiebbar an der Gabel (13) anzubringen.

10. System nach einem der Ansprüche 7 bis 9,
**dadurch gekennzeichnet, dass** es eine elastische Vorrichtung umfasst, das die Stützvorrichtung (11) mit dem Befestigungsstück (9) verbindet, wobei die elastische Vorrichtung konfiguriert ist, um ein Verfahren des Befestigungsstücks (9) in Bezug auf die Stützvorrichtung (11) entlang einer Achse parallel zur Achse X und entlang einer Achse parallel zur Achse Y um eine nominale Position zuzulassen, wobei die elastische Vorrichtung eine vorbestimmte Steifigkeit aufweist, sodass das Verfahren des Befestigungsstücks (9) einen vorbestimmten Verfahrbereich um die nominale Position des Befestigungsstücks (9) in Bezug auf die Stützvorrichtung (11) aufweist.

11. System nach einem der Ansprüche 1 bis 10,
**dadurch gekennzeichnet, dass** das Befestigungsstück (9) umfasst:
- einen Befestigungsrahmen (33), der mindestens einen Ständer (34) beinhaltet, der gebildet ist, um sich mindestens teilweise an der Außenoberfläche (E) der Seitenschale (2) anzuschmiegen, wobei der oder die Ständer (34) dazu bestimmt sind, das Befestigungsstück (9) an der Außenoberfläche (E) der Seitenschale (2) zu befestigen;
- eine Befestigungsstange (35), die eine Längsachse parallel zur Achse X aufweist, wobei die Befestigungsstange (35) am ersten elastischen Element (12) befestigt ist.

12. System nach einem der Ansprüche 1 bis 11,
**dadurch gekennzeichnet, dass** das erste elastische Element (12) mindestens eine Spiralfeder (121) umfasst.

13. System nach den Ansprüchen 1 oder 2 und Anspruch 12,
**dadurch gekennzeichnet, dass** das Befestigungsstück (9) weiter eine erste Führungstraverse (36) umfasst, die eine Längsachse parallel zur Achse Z aufweist, wobei die erste Führungstraverse (36) ein erstes Ende (38) aufweist, das um die Achse X drehbar an der Gabel (13) angebracht ist, wobei die erste Führungstraverse (36) ein zweites Ende (39) aufweist, das verschiebbar an der Befestigungsstange (35) angebracht ist, wobei die Spiralfeder (121) ein erstes an der Gabel (13) befestigtes Ende (122), und ein zweites an der Befestigungsstange (35) befestigtes Ende (123) aufweist, wobei die Spiralfeder (121) die erste Führungstraverse (36) umgibt, das erste elastische Element (12) weiter mindestens eine zweite Führungstraverse (37) parallel zur ersten Führungstraverse (36) umfasst, wobei die zweite Führungstraverse (37) ein erstes Ende (40) aufweist, das um die Achse X drehbar an der Gabel (13) angebracht ist, wobei die zweite Führungstraverse (37) ein zweites Ende (41) aufweist, das verschiebbar an der Befestigungsstange (35) angebracht ist.

14. System nach den Ansprüchen 1 oder 2 und Anspruch 12,
**dadurch gekennzeichnet, dass** das Befestigungsstück (9) weiter eine Führungstraverse (42) umfasst, die eine Längsachse parallel zur Achse Z aufweist, wobei die Führungstraverse (42) ein erstes Ende (43) und ein zweites Ende (44) aufweist, wobei das erste Ende (43) der Führungstraverse (42) an der Befestigungsstange (35) befestigt ist, die Führungstraverse (42) die Gabel (13) zwischen deren ersten Ende (43) und deren zweiten Ende (44) quert, die Spiralfeder (121) ein erstes Ende aufweist, das am zweiten Ende (44) der Führungstraverse (42) befestigt ist, und ein zweites Ende, das an der Befestigungsstange (35) befestigt ist, wobei die Spiralfeder (121) die Führungstraverse (42) umgibt.

15. System nach einem der Ansprüche 1 bis 14,
**dadurch gekennzeichnet, dass** es weiter mindestens eine Haltestruktur (45) umfasst, die konfiguriert ist, um die Form der Seitenschale (2) zu halten, wobei die Haltestruktur (45) umfasst:
- eine gekrümmte Stange (46) in Bogenform, die dazu bestimmt ist, an der Seitenschale (2) befestigt zu werden, sodass sie sich in einer Ebene senkrecht zur Achse X befindet, wobei die gekrümmte Stange (46) ein erstes Ende (461) aufweist, das dazu bestimmt ist, an einem oberen Rand (47) der Seitenschale (2) befestigt zu werden, und ein zweites Ende, (462) das dazu bestimmt ist, an einer Innenoberfläche (I) der Seitenschale (2) befestigt zu werden;
- eine gerade Stange (48), die zwei Enden (481, 482) aufweist, die jeweils am ersten Ende (461) der gekrümmten Stange (46) und am zweiten Ende (462) der gekrümmten Stange (46) befestigt sind;
- eine Strebe (49), die ein erstes Ende (491) aufweist, das eine Platte (492) beinhaltet, die an der gekrümmten Stange (46) und der geraden Stange (48) befestigt ist, wobei die Platte (492) in einer Ebene umfasst ist, welche die gekrümmte Stange (46) und die gerade Stange (48) umfasst, wobei die Strebe (49) weiter ein zweites Ende (493) umfasst, das dazu bestimmt ist, an der Innenoberfläche (I) der Seitenschale (2) befestigt zu werden, wobei die Strebe (49) eine Längsachse aufweist, die einen Winkel ungleich Null mit der Platte (492) einschlägt.

16. System nach einem der Ansprüche 1 bis 15,
**dadurch gekennzeichnet, dass** es weiter mindestens ein Ausrichtmodul (50) umfasst, umfassend:
- einen Ausrichtstift (51), der dazu bestimmt ist, auf einer Innenoberfläche der oberen Schale (6) befestigt zu werden;
- eine Aufnahmeschnittstelle (52), die einen Zylinder (53) beinhaltet, der dazu bestimmt ist, am ersten Ende (461) der gekrümmten Stange (46) befestigt zu werden, einen ersten Kolben (54) und ein fünftes elastisches Element (55), wobei der erste Kolben (54) imstande ist, im Zylinder (53) zu gleiten, der erste Kolben (54) eine Aufnahmeoberfläche (56) beinhaltet, die dazu bestimmt ist, den Ausrichtstift (51) aufzunehmen, der Zylinder (53) und der erste Kolben (54) Längsachsen (L3) parallel zur Achse Z aufweisen, der erste Kolben (54) entlang der Achse Z in Bezug zum Zylinder (53) der Aufnahmeschnittstelle (52) verschiebbar ist, das fünfte elastische Element (55) konfiguriert ist, um eine Kraft entlang der Achse Z an den ersten Kolben (54) anzulegen, wobei die Kraft dazu tendiert, den ersten Kolben (54) in eine nominale Position entlang der Achse Z zu bringen, wenn keine Kraft an die Aufnahmeoberfläche (56) angelegt ist.

17. System nach Anspruch 16,
**dadurch gekennzeichnet, dass** die Aufnahmeschnittstelle (52) weiter mindestens ein sechstes elastisches Element (57) umfasst, das konfiguriert ist, um eine Kraft in einer Ebene parallel zur Achse X und der Achse Y an den ersten Kolben (54) anzulegen, wobei die Kraft dazu tendiert, den ersten Kolben (54) in eine nominale Position entlang der Achse X und der Achse Y zu bringen.

18. System nach einem der Ansprüche 16 und 17,
**dadurch gekennzeichnet, dass** die Aufnahmeschnittstelle (52) weiter umfasst:
- einen zweiten Kolben (58), der eine Längsachse parallel zur Achse Z aufweist, wobei der zweite Kolben (58) in einer Ebene parallel zur Achse X und der Achse Y in Bezug zum Zylinder (3) der Aufnahmeschnittstelle (52) verschiebbar, und entlang der Achse Z feststehend ist, wobei der erste Kolben (54) imstande ist, im zweiten Kolben (58) zu gleiten;
- mindestens ein Einstellelement (59), das konfiguriert ist, um eine Position des zweiten Kolbens (58) in einer Ebene parallel zur Achse X und zur Achse Y anzupassen.

19. System nach einem der Ansprüche 16 bis 18,
**dadurch gekennzeichnet, dass** das Ausrichtmodul (50) umfasst:
- drei Einstellelemente (59), die gleichförmig um den Zylinder (53) verteilt sind, wobei jedes der drei Einstellelemente (59) eine Schraube (60) umfasst, die in eine Öffnung durch den Zylinder (53) hindurch geschraubt ist, wobei die Schraube (60) eines jeden der drei Einstellelemente (59) Längsachsen (L4) aufweist, die in einer gemeinsamen Ebene parallel zur Achse X und zur Achse Y umfasst sind, wobei die Längsachsen (L4) einer jeden Schraube (60) konvergent sind, wobei die Schraube (60) eines jeden der drei Einstellelemente (59) ein erstes Ende (61) umfasst, das konfiguriert ist, um ein Werkzeug aufzunehmen, das ein Festschrauben oder ein Losschrauben der Schraube (60) ermöglicht, und ein zweites Ende (62), das konfiguriert ist, um an den zweiten Kolben (58) je nach Festschrauben oder Losschrauben der Schraube (60) eine Kraft parallel zur Längsachse (L4) der Schraube (60) anzulegen;
- drei siebte elastische Elemente (57), die gleichförmig um den Zylinder (53) verteilt sind, wobei jedes der siebten elastischen Elemente (57) imstande ist, eine Kraft an den ersten Kolben (54) anzulegen.

20. Verfahren zur Montage eines Rumpfkörpers eines Luftfahrzeugs mithilfe des Handhabungssystems nach einem der Ansprüche 1 bis 19, umfassend:
- einen Schritt (E1) zum Installieren einer unteren Schale (4) des Rumpfkörpers (3) auf einer Montageplattform (5),
- einen Schritt (E2) zum Befestigen zweier Seitenschalen (2) des Rumpfkörpers (3), wobei jede der beiden Seitenschalen (2) an zwei Befestigungsvorrichtungen (7) des Handhabungssystems (1) befestigt ist, jede der beiden Seitenschalen (2) mithilfe des Befestigungsstücks (9) einer jeden der beiden Befestigungsvorrichtungen (7) an den beiden Befestigungsvorrichtungen (7) befestigt ist,
- einen Schritt (E3) zum Ausrichten der beiden Seitenschalen (2) in Bezug auf die untere Schale (5) entlang einer Ebene, welche die Achse X und die Achse Y umfasst, durch Handhaben der beiden Seitenschalen (2) mithilfe der Befestigungshalterung (10) des Handhabungssystems (1),
- einen Schritt (E4) zum Ausrichten der beiden Seitenschalen (2) in Bezug auf die untere Schale (5) entlang einer Achse parallel zur Achse Z, durch Handhaben der beiden Seitenschalen (2) mithilfe des ersten elastischen Elements (12) des Handhabungssystems (1),
- einen Schritt (E5) zum Montieren der beiden Seitenschalen (2) an der unteren Schale (5).

21. Verfahren nach Anspruch 20,
**dadurch gekennzeichnet, dass** es weiter die folgenden Schritte umfasst:
- einen Schritt (E6) zum Befestigen mindestens einer Haltestruktur (45) des Handhabungssystems (1) an der Innenoberfläche einer jeden der Seitenschalen (2),
- einen Schritt (E7) zum Befestigen mindestens eines Ausrichtstiftes (51) auf der Innenoberfläche einer oberen Schale (6) des Rumpfkörpers (3),
- einen Schritt (E9) zum Ablegen des Ausrichtstiftes (51) auf der Aufnahmeoberfläche (52) durch Annähern der oberen Schale (6) an die Seitenschalen (2),
- einen Schritt (E10) zum Ausrichten der oberen Schale (6) in Bezug auf die Seitenschalen (2) entlang einer Ebene, umfassend die Achse X und die Achse Y mithilfe der Ausfnahmeschnittstelle (52) des Ausrichtmoduls (50),
- einen Schritt (E11) zum Montieren der oberen Schale (6) an den Seitenschalen (2).

22. Verfahren nach Anspruch 21,
**dadurch gekennzeichnet, dass** es weiter eine Schritt (E8) zum Anbringen eines Fußbodenrostes (G) des Luftfahrzeugs (AC) vor dem Schritt (E9) zum Ablegen umfasst.

## Claims

1. Handling system (1) intended for handling a side shell (2) of an aircraft with a view to assembling a fuselage barrel (3) of the aircraft, the side shell (2) being configured for assembly at least with a lower shell (4) of the aircraft and an upper shell (6), the fuselage barrel (3) after assembly being associated with an orthogonal reference system (R) defined by an axis X parallel to a longitudinal axis (L1) of the fuselage barrel (3), a horizontal axis Y and a vertical axis Z,
wherein the handling system (1) comprises at least two fixing devices (7) per side shell (2), each of the fixing devices (7) being intended to be fixed to a longitudinal end (8) of the side shell (2), each of the fixing devices (7) having a fixing part (9), a fixing support (10) and a first elastic element (12);
- the fixing part (9) being intended to be fixed on an outer surface (E) of the side shell (2);
- the fixing support (10) being intended to be mounted on a supporting device (11) of an assembly platform (5), the fixing support (10) being configured such that the fixing part (9) and the first elastic element (12) are movable in translation, in a plane comprising the axis X and the axis Y, in relation to the supporting device (11) on which the fixing support (10) is intended to be mounted;
- the first elastic element (12) being fixed to the fixing part (9) and to the fixing support (10), the first elastic element (12) being configured to allow a displacement of the fixing part (9) in relation to the supporting device (11) along an axis parallel to the axis Z about a nominal position, the first elastic element (12) having a predetermined stiffness such that the displacement of the fixing part (9) has a predetermined displacement amplitude about the nominal position of the fixing part (9) in relation to the fixing support (10),
**characterized in that** the fixing support (10) comprises a first end (131) and a second end (132) opposite the first end (131), the first end (131) being intended to be mounted so as to be able to rotate in relation to the supporting device (11) about an axis (L2) parallel to the axis X and mounted so as to be movable in translation along the axis Y in relation to the supporting device (11).

2. System as claimed in claim 1,
**characterized in that** the fixing support (10) moreover comprises:
- a fork (13) having a first end (131) and a second end (132) opposite the first end (131), the first end (131) being intended to be mounted rotatably on a rod (14) of a reference positioning device (15) and so as to be movable in translation along the axis Y in relation to the rod (14), the reference positioning device (15) being intended to be mounted fixedly on the holding device (11) on which the fixing device (7) is mounted, the rod (14) having a longitudinal axis (L2) parallel to the axis X, the rod (14) being movable in translation along the axis X, the fixing part (9) being connected to the fork (13) via the first elastic element (12) between the first end (131) and the second end (132) of the fork (13);
- a mechanical ram (16) mounted fixedly in terms of translational movement along the axis Z on the fixing support (10), the mechanical ram (16) comprising a piston (17) configured to be driven by the mechanical ram (16) along the axis Z, the piston (17) comprising a free end intended to be fixed to the second end (132) of the fork (13);
the fork (13) being able to rotate about the longitudinal axis (L2) of the rod (14) when the piston (17) is driven by the mechanical ram (16) along the axis Z, the rotation of the fork (13) being able to cause the side shell (2) to rotate about the longitudinal axis (L1) of the fuselage barrel (3).

3. System as claimed in any one of claims 1 and 2,
**characterized in that** the first elastic element (12) comprises a compression spring (121) having an upper end fixed to the fixing part (9) and a lower end fixed to the fixing support (10), the lower end being in abutment against the fixing support (10), the compression spring (121) being configured to exert an expansion force upward along the axis Z against the fixing part (9) at its upper end.

4. System as claimed in any one of claims 1 to 3,
**characterized in that** the fixing support (10) comprises a yoke (19), the yoke having two legs (191, 192) and a plate (193) connecting the two legs (191, 192), the yoke (19) being mounted so as to be movable in translation along the axis Y on the holding device (11), the yoke (19) being connected to the holding device via a first end (194, 195) of the two legs (191, 192), the plate (193) connecting the two legs (191, 192) at a second end (196, 197) of the two legs (191, 192) that is opposite the first end (194, 195) of the two legs (191, 192), the two legs (191, 192) each comprising a circular opening (20, 21), the circular opening (20, 21) of each of the two legs (191, 192) each having a center aligned along an axis parallel to the axis X, the circular opening (20, 21) of each of the two legs (191, 192) being intended to receive a pin (22),
the mechanical ram (16) being fixed on the plate (193) of the yoke (19) such that the free end of the piston (17) of the mechanical ram (16) is between the two legs (191, 192) of the yoke (19), the free end of the piston (17) of the mechanical ram (16) having a ring (23) intended to receive the pin (22), the free end of the piston (17) of the mechanical ram (16) being configured to be fixed to the second end (132) of the fork (13) by way of introduction of the pin (22) into the circular opening (20, 21) of each of the two legs (191, 192) and into the ring (23).

5. System as claimed in claim 1 or claim 2 and either one of claims 3 and 4,
**characterized in that** the fixing support (10) moreover comprises:
- a fixing element (24) intended to be fixed to the holding device (11);
- a second elastic element (25) connecting the yoke (19) to the fixing element (24), the second elastic element (25) being configured to allow a displacement (26) of the yoke (19) in relation to the fixing element (24) along an axis parallel to the axis Y, the second elastic element (25) having a predetermined stiffness such that the displacement (26) has a predetermined amplitude about a nominal position of the yoke (19) in relation to the fixing element (24);
the first end (131) of the fork (13) comprising:
- a support portion (27) intended to be mounted rotatably on the rod (14) of the reference positioning device (15);
- a third elastic element (28), the third elastic element (28) connecting the second end (132) of the fork (13) and the support portion (27), the third elastic element (28) being configured to allow a displacement (29) of the fork (13) in relation to the support portion (27) along an axis parallel to the axis Y, the third elastic element (28) having a predetermined stiffness such that the displacement (29) has a predetermined amplitude about a nominal position of the fork (13) in relation to the support portion (27).

6. System as claimed in any one of claims 3 to 5,
**characterized in that** it comprises a fourth elastic element connecting the supporting device (11) to the fixing part (9), the fourth elastic element being configured to allow a displacement of the fixing part (9) in relation to the supporting device (11) along an axis parallel to the axis X about a nominal position, the fourth elastic element having a predetermined stiffness such that the displacement of the fixing part (9) has a predetermined displacement amplitude about the nominal position of the fixing part (9) in relation to the supporting device (11).

7. System as claimed in any one of claims 1 and 2,
**characterized in that** the first elastic element (12) comprises a tension spring (121) having an upper end fixed to the fixing support (10) and a lower end fixed to the fixing part (9), the lower end hanging freely from the fixing support (10), the tension spring (121) being configured to exert a tensile force upward along the axis Z on the fixing part (9) at its lower end.

8. System as claimed in claims 1, 2 and 7,
**characterized in that** the fixing support (10) comprises a fixing element (24) intended to be fixed to the holding device (11), the mechanical ram (16) being mounted so as to be movable in translation along the axis X at the fixing element (24),
the first elastic element (12) being mounted so as to be movable in translation at the fork (13) along the axis Y.

9. System as claimed in either of claims 1 or 2 and either one of claims 7 and 8,
**characterized in that** the fixing support (10) comprises at least one first guide rail (31) fixed on the fixing element (24) parallel to the axis X for mounting the mechanical ram (16) at the fixing element (24) so as to be movable in translation along the axis X,
the fixing support (10) comprises at least one second guide rail (32) fixed on the fork (13) parallel to the axis Y for mounting the first elastic element (12) at the fork (13) so as to be movable in translation along the axis Y.

10. System as claimed in any one of claims 7 to 9,
**characterized in that** it comprises an elastic device connecting the supporting device (11) to the fixing part (9), the elastic device being configured to allow a displacement of the fixing part (9) in relation to the supporting device (11) along an axis parallel to the axis X and along an axis parallel to the axis Y about a nominal position, the elastic device having a predetermined stiffness such that the displacement of the fixing part (9) has a predetermined displacement amplitude about the nominal position of the fixing part (9) in relation to the supporting device (11).

11. System as claimed in any one of claims 1 to 10,
**characterized in that** the fixing part (9) comprises:
- a fixing frame (33) having at least one upright (34) shaped to closely follow at least in part the outer surface (E) of the side shell (2), the one or more uprights (34) being intended to fix the fixing part (9) on the outer surface (E) of the side shell (2);
- a fixing bar (35) having a longitudinal axis parallel to the axis X, the fixing bar (35) being fixed to the first elastic element (12).

12. System as claimed in any one of claims 1 to 11,
**characterized in that** the first elastic element (12) comprises at least one helical spring (121).

13. System as claimed in claim 1 or 2 and claim 12,
**characterized in that** the fixing part (9) moreover comprises a first guiding crossmember (36) having a longitudinal axis parallel to the axis Z, the first guiding crossmember (36) having a first end (38) mounted so as to be able to rotate about the axis X at the fork (13), the first guiding crossmember (36) having a second end (39) mounted so as to be movable in translation at the fixing bar (35), the helical spring (121) having a first end (122) fixed to the fork (13) and a second end (123) fixed to the fixing bar (35), the helical spring (121) surrounding the first guiding crossmember (36), the first elastic element (12) moreover comprises at least one second guiding crossmember (37) parallel to the first guiding crossmember (36), the second guiding crossmember (37) having a first end (40) mounted so as to be able to rotate about the axis X at the fork (13), the second guiding crossmember (37) having a second end (41) mounted so as to be movable in translation at the fixing bar (35).

14. System as claimed in claim 1 or 2 and claim 12,
**characterized in that** the fixing part (9) moreover comprises a guiding crossmember (42) having a longitudinal axis parallel to the axis Z, the guiding crossmember (42) having a first end (43) and a second end (44), the first end (43) of the guiding crossmember (42) being fixed to the fixing bar (35), the guiding crossmember (42) passing through the fork (13) between its first end (43) and its second end (44), the helical spring (121) having a first end fixed to the second end (44) of the guiding crossmember (42) and a second end fixed to the fixing bar (35), the helical spring (121) surrounding the guiding crossmember (42).

15. System as claimed in any one of claims 1 to 14,
**characterized in that** it moreover comprises at least one holding structure (45) configured to maintain the shape of the side shell (2), the holding structure (45) comprising:
- an arcuately curved bar (46) intended to be fixed to the side shell (2) such that it is located in a plane perpendicular to the axis X, the curved bar (46) having a first end (461) intended to be fixed to an upper edge (47) of the side shell (2) and a second end (462) intended to be fixed on an inner surface (I) of the side shell (2);
- a straight bar (48) having two ends (481, 482) fixed respectively to the first end (461) of the curved bar (46) and to the second end (462) of the curved bar (46);
- a stay (49) having a first end (491) comprising a plate (492) fixed to the curved bar (46) and the straight bar (48), the plate (492) being comprised in a plane comprising the curved bar (46) and the straight bar (48), the stay (49) moreover comprising a second end (493) intended to be fixed to the inner surface (I) of the side shell (2), the stay (49) having a longitudinal axis forming a non-zero angle with the plate (492).

16. System as claimed in any one of claims 1 to 15,
**characterized in that** it moreover comprises at least one alignment module (50) comprising:
- an aligning pin (51) intended to be fixed on an inner surface of the upper shell (6);
- a receiving interface (52) having a cylinder (53) intended to be fixed to the first end (461) of the curved bar (46), a first piston (54) and a fifth elastic element (55), the first piston (54) being able to slide in the cylinder (53), the first piston (54) having a receiving surface (56) intended to receive the aligning pin (51), the cylinder (53) and the first piston (54) having longitudinal axes (L3) parallel to the axis Z, the first piston (54) being movable in translation along the axis Z in relation to the cylinder (53) of the receiving interface (52), the fifth elastic element (55) being configured to exert a force along the axis Z against the first piston (54), said force tending to bring the first piston (54) into a nominal position along the axis Z if no force is applied to the receiving surface (56).

17. System as claimed in claim 16,
**characterized in that** the receiving interface (52) moreover comprises at least one sixth elastic element (57) configured to exert a force in a plane parallel to the axis X and the axis Y against the first piston (54), said force tending to bring the first piston (54) into a nominal position along the axis X and the axis Y.

18. System as claimed in either one of claims 16 and 17,
**characterized in that** the receiving interface (52) moreover comprises:
- a second piston (58) having a longitudinal axis parallel to the axis Z, the second piston (58) being movable in translation in a plane parallel to the axis X and the axis Y in relation to the cylinder (3) of the receiving interface (52) and fixed along the axis Z, the first piston (54) being able to slide in the second piston (58);
- at least one adjusting element (59) configured to regulate a position of the second piston (58) in a plane parallel to the axis X and the axis Y.

19. System as claimed in any one of claims 16 to 18,
**characterized in that** the alignment module (50) comprises:
- three adjusting elements (59) distributed uniformly around the cylinder (53), each of the three adjusting elements (59) comprises a screw (60) screwed in an opening through the cylinder (53), the screw (60) of each of the three adjusting elements (59) having longitudinal axes (L4) comprised in a common plane parallel to the axis X and the axis Y, the longitudinal axes (L4) of each screw (60) being concurrent, the screw (60) of each of the three adjusting elements (59) comprising a first end (61) configured to receive a tool for screwing or unscrewing the screw (60) and a second end (62) configured to exert a force parallel to the longitudinal axis (L4) of the screw (60) against the second piston (58) depending on the degree of screwing and unscrewing of the screw (60);
- three seventh elastic elements (57) distributed uniformly around the cylinder (53), each of the seventh elastic elements (57) being able to exert a force against the first piston (54).

20. Method for assembling a fuselage barrel of an aircraft using the handling system as claimed in any one of claims 1 to 19,
comprising:
- a step (E1) of installing a lower shell (4) of the fuselage barrel (3) on an assembly platform (5),
- a step (E2) of fixing two side shells (2) of the fuselage barrel (3), each of the two side shells (2) being fixed to two fixing devices (7) of the handling system (1), each of the two side shells (2) being fixed to two fixing devices (7) by means of the fixing part (9) of each of the two fixing devices (7),
- a step (E3) of aligning the two side shells (2) in relation to the lower shell (5) along a plane comprising the axis X and the axis Y by handling the two side shells (2) using the fixing support (10) of the handling system (1),
- a step (E4) of aligning the two side shells (2) in relation to the lower shell (5) along an axis parallel to the axis Z by handling the two side shells (2) using the first elastic element (12) of the handling system (1),
- a step (E5) of assembling the two side shells (2) with the lower shell (5).

21. Method as claimed in claim 20,
**characterized in that** it moreover comprises the following steps:
- a step (E6) of fixing at least one holding structure (45) of the handling system (1) to the inner surface of each of the side shells (2),
- a step (E7) of fixing at least one aligning pin (51) on the inner surface of an upper shell (6) of the fuselage barrel (3),
- a step (E9) of depositing the aligning pin (51) on the receiving surface (52) by moving the upper shell (6) closer to the side shells (2),
- a step (E10) of aligning the upper shell (6) in relation to the side shells (2) along a plane comprising the axis X and the axis Y using the receiving interface (52) of the alignment module (50),
- a step (E11) of assembling the upper shell (6) with the side shells (2).

22. Method as claimed in claim 21,
**characterized in that** it moreover comprises a step (E8) of positioning a floor grid (G) of the aircraft (AC) before the depositing step (E9).
